(19) Europäisches Patentamt
European Patent Office
Office européen des brevets

(11) Publication number: **0 192 267 B1**

(12) # EUROPEAN PATENT SPECIFICATION

(45) Date of publication of patent specification: **17.01.90**

(21) Application number: **86102228.3**

(22) Date of filing: **20.02.86**

(51) Int. Cl.$^5$: **C 09 K 19/04**, C 09 K 19/20, C 09 K 19/22, C 09 K 19/46, C 09 K 19/48

(54) **Chiral smectic liquid crystal composition and light switching element using the same.**

(30) Priority: **20.02.85 JP 32453/85**

(43) Date of publication of application: **27.08.86 Bulletin 86/35**

(45) Publication of the grant of the patent: **17.01.90 Bulletin 90/03**

(84) Designated Contracting States: **CH DE FR GB LI**

(56) References cited:
**US-A-4 082 428**
**US-A-4 108 793**

(73) Proprietor: **Chisso Corporation**
**6-32, Nakanoshima 3-chome Kita-ku**
**Osaka-shi Osaka-fu (JP)**

(73) Proprietor: **HITACHI, LTD.**
**6, Kanda Surugadai 4-chome Chiyoda-ku**
**Tokyo (JP)**

(72) Inventor: **Furukawa, Kenji**
**16-7, Kurihama, 1-Chome**
**Yokosukashi Kanagawaken (JP)**
Inventor: **Terashima, Kanetsugu**
**19-21, Yanagicho Kanazawaku**
**Yokohamashi Kanagawaken (JP)**

(74) Representative: **Eitle, Werner, Dipl.-Ing. et al**
**Hoffmann, Eitle & Partner Patentanwälte**
**Arabellastrasse 4**
**D-8000 München 81 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 192 267 B1

**Description**

Background of the Invention

Field of the Invention

This invention relates to a chiral smectic liquid crystal composition. More specifically, it relates to a ferroelectric liquid crystal material comprising chiral smectic liquid crystal compounds having substantially the same molecular chain length.

Description of the Prior Art

Liquid crystals are now being used widely as display materials, but most of such liquid crystal display elements are of Twisted Nematic (TN) display mode using a liquid crystal belonging to a nematic phase as the liquid crystal material. Since the TN display mode is a non-emissive type, it has characteristic features that it does not give fatigue to eyes and works with extremely small power consumption. On the other hand, it has such a defect as slow response and that display is not observable depending upon the angle from which it is viewed. Recently, a demand, particularly for quick response property has been made and attempt to improve liquid crystal material has been made to meet such a demand. However, compared with other emissive displays (e.g. electroluminescence display, plasma display, etc.), there is still a great difference in response time.

To maintain the good response property comparable to emissive displays without losing the characteristic features of non-emissive type as well as its low power consumption, it is indispensable to develop a new liquid crystal display mode which can substitute for a TN type display mode. In one of such attempts, there is a display device which utilizes the light switching phenomenon of a ferroelectric liquid crystal [see N. A. Clark, S. T. Lagerwall Appl. Phys. Lett., *36*, 899 (1980)]. The existence of a ferroelectric liquid crystal was disclosed for the first time by R. B. Meyer et al in 1975 [see R. B. Meyer et al; J. de Physique *36*, L—69 (1975)]. From a standpoint of liquid crystal structure, this liquid crystal belongs to chiral smectic C phase, chiral smectic I phase, chiral smectic F phase, chiral smectic G phase, or chiral smectic H phase (hereinafter abbreviated as Sc* phase, $S_I$* phase, $S_F$* phase, $S_G$* phase, and $S_H$* phase, respectively).

Application of light switching effect of Sc* phase to display elements has three superior characteristic features, as compared with TN display mode. The first feature is its very quick response. Its response time is less than 1/100 as compared with that of a common TN display mode. The second feature is that it has a memory effect which makes multiplexing drive easy to adopt in co-operation with the above-mentioned quick response. The third feature is the easiness of attaining the gray scale (gradation of brightness). In case of a TN display mode, gray scale is attained by controlling applied voltage but there are difficult problems such as temperature dependence of threshold voltage, voltage dependence of response time, etc. On the other hand, when light switching effect of Sc* phase is applied, gray scale can be attained easily by controlling polarity-inversion time. Thus the latter is very suitable for graphic display or the like.

As display methods, two methods can be considered. One of them is birefringence type which uses two polarizer plates and the other is guest-host type which uses dichroic dyes. Since Sc* phase has spontaneous electric polarization, a molecule turns over by a π rotation around a helical axis, which is an axis of rotation, by inverting the polarity of applied voltage. By filling a liquid crystal composition having Sc* phase into a liquid crystal display cell that has been subjected to a surface treatment for aligning liquid crystal molecules parallel to electrode surface, and placing the liquid crystal cell between two polarizers arranged in advance so that the polarization plane of one of the polarizers is parallel to the direction of liquid crystal molecules and inverting the polarity of applied voltage, the bright range of vision and dark range of vision (which are determined by the angle between the polarization planes) can be interexchanged. On the other hand, when operated by guest-host mode, colored range of vision and colorless range of vision (which are determined by the arrangement of polarization plates) can be interexchanged by inverting the polarity of applied voltage.

The present demand upon the ferroelectric chiral smectic liquid crystal composition as a display element material consists in, for example, (1) that it shows ferroelectricity in a practical temperature range including room temperature, (2) that it has a large spontaneous electric polarization, and (3) that it has a long helical pitch, etc. Since there is no chiral smectic liquid crystal compound which satisfies all these conditions as mentioned above by itself, a ferroelectric chiral smectic liquid crystal composition which satisfies all the conditions as mentioned above must be made by repeating trials and errors in mixing several kinds of chiral smectic liquid crystal compounds respectively satisfying a part of the conditions. Additionally stated, with respect to helical pitch, a ferroelectric chiral smectic liquid crystal composition having a long helical pitch is obtained by mixing a chiral smectic liquid crystal compound having a twist sense of helix right-handed and a chiral smectic liquid crystal compound having a twist sense of helix left-handed (see Japanese Patent Application No. 186,312/1983).

Summary of the Invention

As is apparent from the above, a principal object of this invention is to provide a chiral smectic liquid crystal composition showing ferroelectricity in a temperature range of at least below room temperature to

above 50°C and having a large spontaneous electric polarization. Another object of this invention is to provide a light switching element capable of making extremely quick response.

The inventors of the present invention have found surprising facts in the course of intensive investigations on ferroelectric liquid crystal compositions with a view of solving the above-mentioned problems, and, as a result, completed the present invention. The first fact is that a difference in molecular chain length between liquid crystal compounds constituting a ferroelectric liquid crystal composition greatly influences the upper limit temperature of Sc* phase of the composition. Specifically speaking, when the difference in molecular chain length between liquid crystal compounds constituting a ferroelectric chiral smectic liquid crystal composition is within a range corresponding to the straight alkyl chain having 5 carbon atoms, approximate additivity in the upper limit temperature of Sc* phase of the composition is established based on the ratio of the components. On the other hand, in a composition consisting of liquid crystal compounds providing a difference, in molecular chain length, exceeding a length corresponding to the straight alkyl chain having 5 carbon atoms, since the upper limit temperature of Sc* phase drastically drops, the temperature range of Sc* phase becomes very narrow.

The second fact is that, as the number of chiral smectic liquid crystal compounds as the components of a ferroelectric liquid crystal composition increases, the melting point of the composition markedly lowers. The lower limit temperature of Sc* phase is the melting point in most of ferroelectric chiral smectic liquid crystal compositions. Thus it has been found that the lower limit temperature of Sc* phase can be extended to a lower side by increasing the number of the component.

In the first aspect of the present invention, there is provided (1) a ferroelectric chiral smectic liquid crystal composition comprising at least three kinds of chiral smectic liquid crystal compounds within which a difference, in molecular chain length does not exceed a length corresponding to the straight alkyl chain having 5 carbon atoms. According to an embodiment of this invention, there is provided (2) a ferroelectric chiral smectic liquid crystal composition as described in (1) above, wherein the chiral smectic liquid crystal compounds are those represented by a general formula:

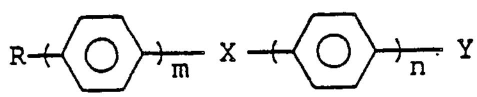 (i)

wherein m and n each independently are an integer of 1 or 2, X is

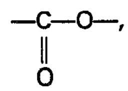

—CH=N—, —$CH_2O$—,

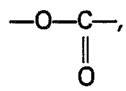

—N=CH—, —$OCH_2$—, or a single bond, R is an alkyl or alkoxy group having 1 to 18 carbon atoms, Y is an alkyl, alkoxy, alkoxycarbonyl, alkanoyl, or alkanoyloxy group having an asymmetric carbon atom.

In the second aspect of this invention, there is provided a light switching element using a ferroelectric chiral smectic liquid crystal composition comprising at least three kinds of chiral smectic liquid crystal compounds within which a difference in molecular chain length does not exceed a length corresponding to a straight alkyl chain having 5 carbon atoms.

Brief Description of the Drawings

Figure 1 ~ Figure 21 are two components phase diagrams of the combinations picked up from the above-mentioned compound A ~ compound W as shown in Table 1. In these Figures, Iso indicates isotropic liquid phase, cryst, crystal phase, $S_A$, smectic A phase, $S_B$, smectic B phase, Sc*, chiral smectic C phase, $S_H$*, chiral smectic H phase and Ch, cholesteric phase, respectively. Further broken lines show that this phase region appears only in the course of temperature lowering and such phases are indicated by a symbol of (   ). In these diagrams, compositions are % by weight.

Table 1

| No. of drawings | 1 | 2 | 3 | 4 | 5 | 6 | 7 | 8 | 9 | 10 | 11 | 12 | 13 | 14 | 15 | 16 | 17 | 18 | 19 | 20 | 21 |
|---|---|---|---|---|---|---|---|---|---|---|---|---|---|---|---|---|---|---|---|---|---|
| Compound | A | C | D | E | F | F | G | H | J | K | L | J | U | V | W | M | N | L | P | D | F |
| Compound | B | B | B | B | B | A | B | B | I | I | I | S | T | T | T | E | F | A | O | R | Q |

Detailed Description of the Invention

Explanation will be given by way of examples, to the establishment of approximate additivity in the upper limit temperature of Sc* phase in accordance with the component ratio in a system of a mixture of chiral smectic liquid crystal compounds which does not provide a difference, in molecular chain length, exceeding a length corresponding to the straight alkyl chain having 5 carbon atoms. The following 23 kinds of chiral smectic liquid crystal compounds were used in examination of additivity in the upper limit temperature of Sc* phase. These compounds will hereinafter be referred to in terms of abbreviations mentioned in the parentheses.

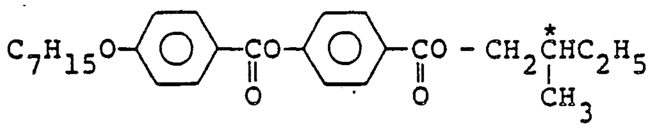
(Compound A)

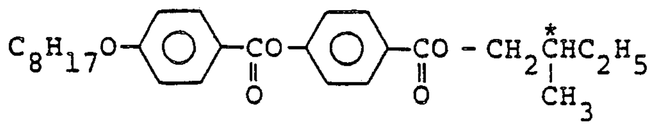
(Compound B)

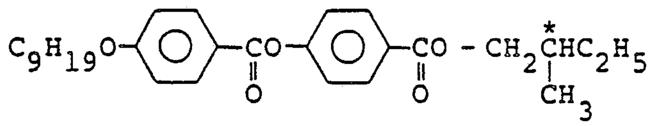
(Compound C)

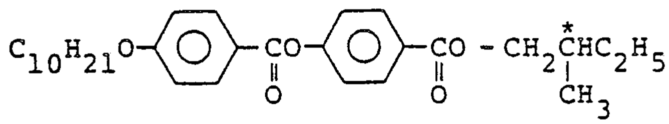
(Compound D)

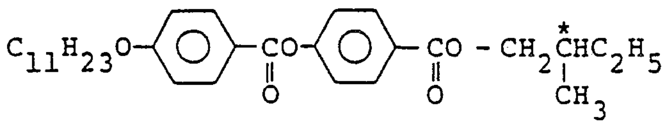
(Compound E)

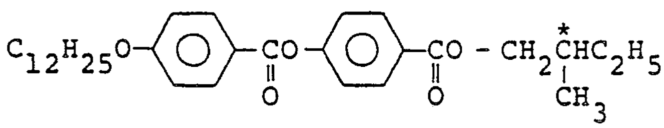
(Compound F)

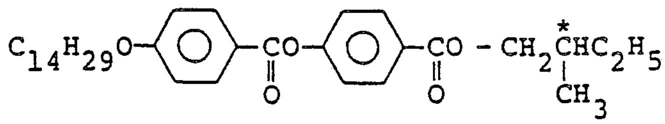
(Compound G)

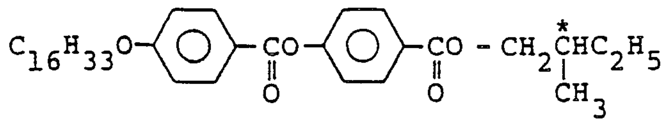
(Compound H)

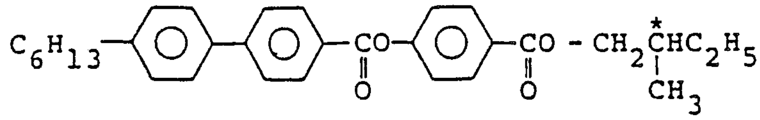
(Compound I)

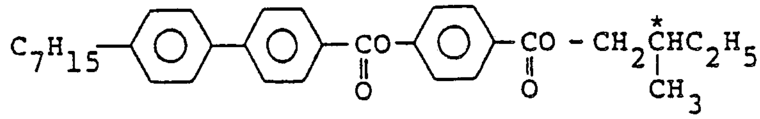
(Compound J)

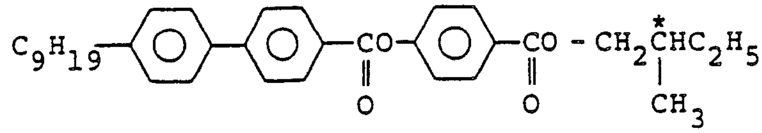
(Compound K)

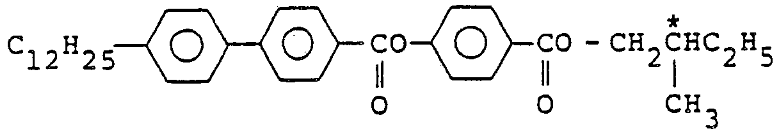
(Compound L)

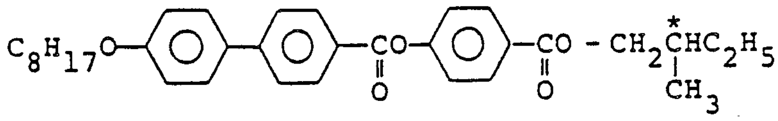
(Compound M)

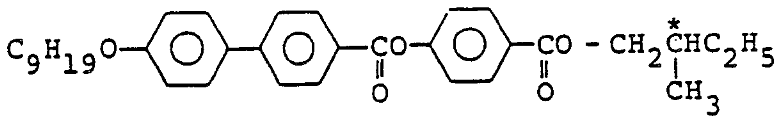
(Compound N)

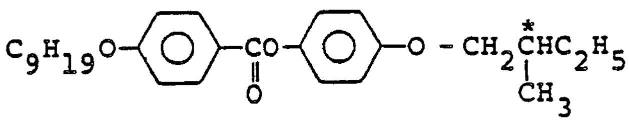
(Compound O)

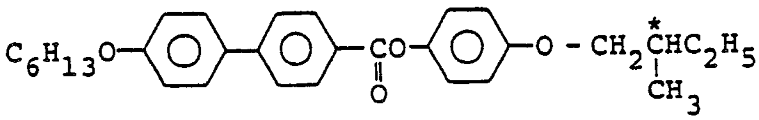
(Compound P)

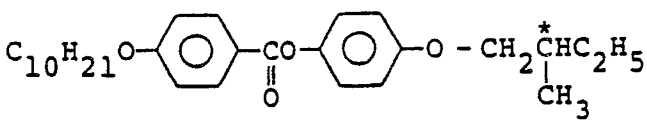
(Compound Q)

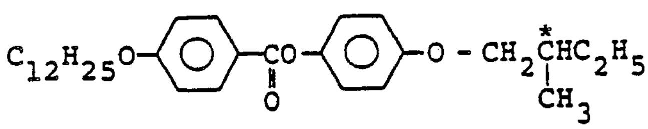
(Compound R)

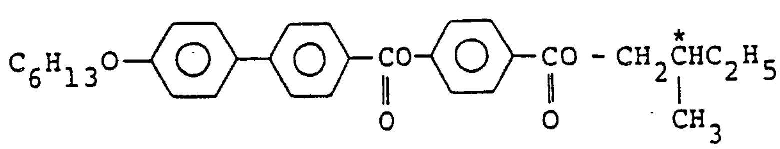
(Compound S)

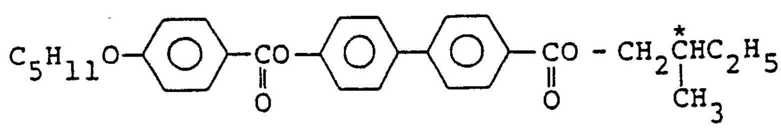
(Compound T)

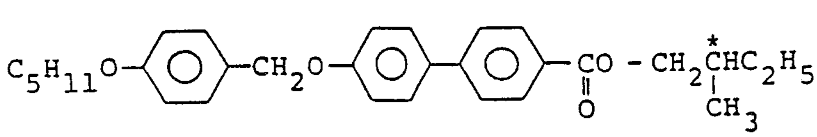
(Compound U)

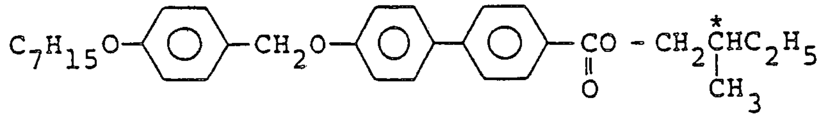 (Compound V)

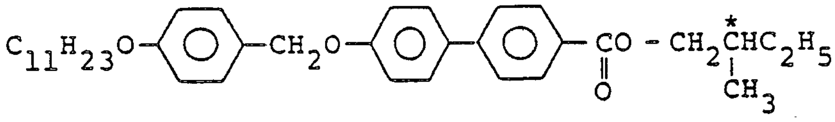 (Compound W)

Figs. 1 to 8 show the influences of differences in chain length between straight chain alkyl groups in homologous compounds wherein m = 1, n = 1,

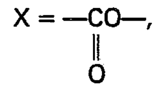

and

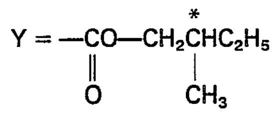

in the formula (i), namely the compounds represented by the following formula (ii):

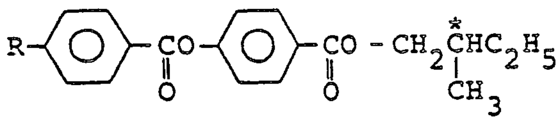 (ii)

on the upper limit temperatures of Sc* phase, namely the Sc*-$S_A$ phase transition temperature, of compositions containing some of the above-mentioned compounds. As shown in Figs. 1 to 4, in a binary system of a compound B having $C_8H_{17}O$— as R in the formula (ii) and a compound providing a difference of 1 to 3 in the number of carbon atoms in the straight alkyl chain as R from the compound B, additivity in the upper limit temperature of Sc* phase is established with an evidently concentration-dependent linear variation of the upper limit temperature of Sc* phase relative to the ratio of components. In a binary system involving a difference of 4 or 5 in the number of carbon atoms between straight alkyl chains as shown in Figs. 5 and 6, the dotted line of the upper limit temperature of Sc* phase deviates slightly toward the side of low temperatures from a straight line. By contrast, in a binary system involving a difference of 6 or 8 in the number of carbon atoms between straight chain alkyl groups as shown in Figs. 7 and 8, the line of the upper limit temperature of Sc* phase shows an extremely drastic drop. Particularly in the system of Fig. 8, there appears a range of ratio of component wherein Sc* phase is not present at or above 0°C.

Figs. 9 to 11 show influences of differences in chain length between straight chain alkyl groups of homologous compounds wherein m = 2, n = 1,

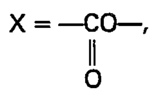

and

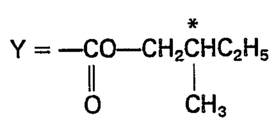

in the formula (i), namely, the compounds represented by the following formula (iii):

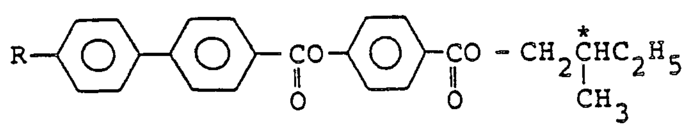 (iii)

on the upper limit temperature of Sc* phase, as in the foregoing case. Also in a binary system composed of some of homologous compounds in the formula (iii), linearity can be seen in the upper limit temperature of Sc* phase in the cases where differences of 1 and 3 in the number of carbon atoms between straight chain alkyl groups are, respectively involved as the difference in molecular chain length (Figs. 9 and 10), while the line of the upper limit temperature of Sc* phase greatly deviates toward the side of lower temperatures in the case where the difference in the number of carbon atoms between straight chain alkyl groups is 6 (Fig. 11).

Existence of a region of component ratio wherein the upper limit temperature of Sc* phase drastically drops as shown in Figs. 7, 8, and 11 is very important in preparation of practically usable ferroelectric chiral smectic liquid crystal composition. In other words, a case where the temperature range of Sc* phase notably deviates toward the side of lower temperatures apart from the practical temperature range, or a case where the temperature range of Sc* phase becomes very narrow is often encountered in investigations on ferroelectric liquid crystal compositions to be practically used when consideration is given only to other properties (e.g., temperature range of Sc*, degree of spontaneous electric polarization, and length of helical pitch) of chiral smectic liquid crystal compounds. Accordingly, in order to obtain a practically usable ferroelectric chiral smectic liquid crystal composition while avoiding the above-mentioned cases, the difference in molecular chain length between chiral smectic liquid crystal compounds as the components must be 5 or less in terms of a difference in the number of carbon atoms in the straight alkyl chain.

The establishment of additivity in the upper limit temperature of Sc* phase has hereinbefore been discussed with respect to the binary systems composed of analogous chiral smectic liquid crystal compounds having different numbers of carbon atoms in their straight chain alkyl groups. The foregoing idea concerning a necessity of difference in molecular chain length between components can be expanded to compositions composed of non-analogous chiral smectic compounds on the basis of a given assumption set in discussion of the molecular chain length (to the effect, for example, (a) that —O— and

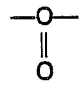

be equal to $—CH_2—$ in chain length, (b) that

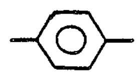

be equal to $—CH_2CH_2CH_2—$ in chain length, and/or (c) that $—CH_2O—$ be equal to

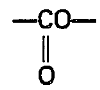

in chain length), as will now be described.

Fig. 12 is a phase diagram of a binary system composed of a compound J and a compound S as mentioned before. On the assumption that —O— in the alkoxyl group may correspond to $—CH_2—$ as an alkyl chain unit of one carbon atom, the system constitutes compositions of two components having equal molecular chain length. In this system, additivity in the upper limit temperature of Sc* phase is held.

Figs. 13 to 15 are phase diagrams of binary systems, respectively composed of a compound T having

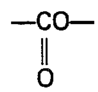

as X in the formula (i) and one of compounds U, V, and W having a different skeletal unit of $—CH_2O—$ as X in the formula (i) from the above

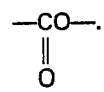

On the assumption that

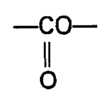

may be equal to $—CH_2O—$ in molecular chain length, additivity in the upper limit temperature of Sc* phase is held in binary systems of the compound T with the compound U (Fig. 13) or the compound V (Fig. 14), which provides a difference of 5 or less in the number of carbon atoms in the straight chain alkyl group as representing the difference in molecular chain length between the compounds, while the Sc*-$S_A$ phase transition temperature shows a drastic drop in a binary system of the compound T with the compound W (Fig. 15), which provides a difference of 6 in the number of carbon atoms in the straight chain alkyl group as representing the difference in molecular chain length between the compounds. Also on the assumptions, in discussion of the molecular chain length, that a p-phenylene group may be substantially equal to a trimethylene group, and that a carbonyl group may be substantially equal to a methylene group, even in compositions composed of non-analogous chiral smectic liquid crystal compounds, the difference in molecular chain length can be compared by the difference in the number of carbon atoms between straight alkyl chains with additivity held in the upper limit temperature of Sc* phase in a system involving a small

difference in chain length, just as in the binary systems of analogous compounds. This is demonstrated in Figs. 16 to 21 except for Fig. 18.

More specifically, additivity in the upper limit temperature of Sc* phase is held in a binary system composed of a compound M and a compound E (Fig. 16), a binary system composed of a compound N and a compound F (Fig. 17), and a binary system composed of a compound P and a compound O (Fig. 19), where each pair of compounds can be regarded as having substantially the same molecular chain length. When the difference in molecular chain length is expressed by ΔC and a case involving a difference in chain length corresponding to a difference of m in the number of carbon atoms between straight alkyl chains is represented by a formula: $\Delta C = m$, additivity in the upper limit temperature of Sc* phase can be recognized in Fig. 20 for a binary system of $\Delta C = 1$ (a compound D and a compound R) and Fig. 21 for a binary system of $\Delta C = 3$ (a compound F and a compound Q). By contrast, in a binary system of $\Delta C = 7$, which is composed of a compound A and a compound L (Fig. 18), the upper limit temperature of Sc* phase drastically drops, and the presence of a wide range of component ratio where the Sc* phase does not exist at or above 0°C is substantiated. Accordingly, the foregoing assumptions (a), (b), and (c) set for discussion of the molecular chain length are judged to be reasonable. Thus, the idea is believed to be capable of being expanded to those assumptions including an assumption (d) that —CH=N— and —N=CH— may be equal to $—CH_2CH_2—$ in chain length.

Description has hereinbefore been made of the results of studies as to many binary systems composed of chiral smectic liquid crystal compounds having a 2-methylbutyl group as Y in the formula (i). It can be generally concluded from the above that sufficient consideration must be given to the following things for making investigations on preparation of a practically usable ferroelectric chiral smectic liquid crystal composition. Specifically,

(a) The molecular chain length of liquid crystal compounds as the components must be made substantially uniform.

(b) In discussion of the molecular chain length, it can be regarded that a p-phenylene group is equal to a trimethylene group in chain length, and that

$$—\underset{\underset{O}{\|}}{C}O—,$$

—CH=N— and $—CH_2O—$ are all equal to an ethylene group in chain length.

(c) The difference in molecular chain length between liquid crystal compounds as the components should be set within a length corresponding to the straight alkyl chain having 5 carbon atoms.

Means for avoiding a drastic drop in the upper limit temperature of Sc* phase of a chiral smectic liquid crystal composition have been described above. On the other hand, the lower limit temperature or melting point of Sc* phase is higher than room temperature in most of the compositions belonging to the binary systems employed in the foregoing examination. Thus, the compositions of these binary systems cannot be put into practical use by themselves as such. In general, a relationship between the eutectic composition of liquid crystal compounds and the eutectic point can be easily inferred from the following equation of Schröder-van Laar:

$$1n\ Xi = \Delta Hi\ (\frac{1}{Ti} - \frac{1}{T})\frac{1}{R}$$

provided that

$$\sum_{i=1}^{N} Xi = 1,$$

and wherein T and Ti are the melting points of a mixture system, and a compound as the component i, respectively, ΔHi is the heat of fusion of the compound as the component i, Xi is the molar fraction of the component i, R is the gas constant, and N is the number of components. As is apparent from the above-mentioned equation, the heat of fusion has a great influence on the eutectic point. The aforementioned homologous compounds does not differ so much in the heat of fusion, and, hence, a difference in molecular chain length does not exert so much influence on the eutectic point of compositions of binary systems (Figs. 9 to 11). However, it was found that the above-mentioned equation provides a higher value of eutectic point than the measured value as the number of components increases. For example, the melting point and upper limit temperature of Sc* phase, calculated, of a binary mixture of a compound A (25% by weight) and a compound B (75% by weight) expressed by the formula (ii) are 22°C and 28°C, respectively, while the corresponding measured values are 21°C and 28°C, respectively. Thus it can be concluded that the calculated values are substantially in agreement with the measured values. On the other hand, in mixtures of ternary and quinary systems involving an increased number of analogous compounds of the formula (ii) as the components, the melting point or lower limit temperature of Sc* phase drastically drops. Thus a practically usable ferroelectric chiral smectic liquid crystal compound can be obtained. The calculated melting point and upper limit temperature of Sc* phase of a ternary mixture of a compound A

(36% by weight), a compound B (42% by weight), and a compound D (22% by weight) are 15°C and 29°C, respectively, while the corresponding measured values are 8°C and 28°C, respectively. Thus a composition having a greatly lowered lower limit temperature with no substantial lowering of the upper limit temperature of Sc* phase to show an Sc* phase around room temperature can be obtained.

The calculated melting point and upper limit temperature of Sc* phase of a quinary mixture of a compound A (30% by weight), a compound B (35% by weight), a compound C (7% by weight), a compound D (18% by weight), and a compound E (10% by weight) are 12°C and 30°C, respectively, while the corresponding measured values are 3°C and 29°C, respectively.

As described hereinbefore, in compositions composed of three or more chiral smectic liquid crystal compounds having substantially uniform molecular chain length, additivity in the upper limit temperature of Sc* phase in accordance with the component ratio is established, and, hence, the upper limit temperature of Sc* phase does not greatly drop, while the melting point or lower limit temperature of Sc* phase greatly drops. Accordingly, it can be understood that a ferroelectric chiral smectic liquid crystal composition capable of showing an Sc* phase over a wide temperature range from a low temperature zone around 0°C can be obtained.

The following Examples will demonstrate that the lower limit temperature or melting point is greatly lowered by using three or more chiral smectic liquid crystal compounds, preferably three or more non-analogous chiral smectic liquid crystal compounds. The following Examples will also sufficiently demonstrate other effects attained by the present invention, including attainment of a ferroelectric liquid crystal composition having a large electric polarization and a long helical pitch and attainment of a light switching element capable of making very quick response by using a liquid crystal composition as mentioned above.

In examples, all % means % by weight.

## Example 1

A chiral smectic liquid crystal composition consisting of following 4 kinds of compounds represented by the previously described general formula (i) was prepared.

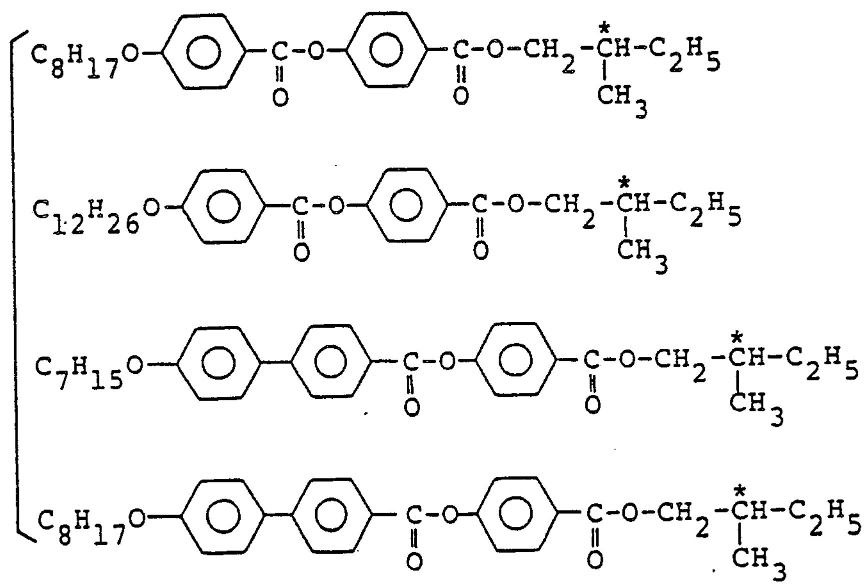

45%

15%

25%

15%

This composition is a material which can be considered to correspond to the chain length of a straight chain alkyl group having 4 carbon atoms in the maximum difference of the length of molecular chain of the component liquid crystal compound.

This composition showed Sc* phase in the temperature range of 0°C ~ 55°C, and a phase transition, which turned to a smectic A phase (hereinafter abbreviated as SA phase) at 55°C and to isotropic liquid at 90°C. Further the value of spontaneous polarization of this composition was 4.2 nC/cm$^2$ at 20°C.

## Example 2

A chiral smectic liquid crystal composition having a following composition, containing 3 kinds of chiral smectic liquid crystal compounds represented by the general formula (i) was prepared.

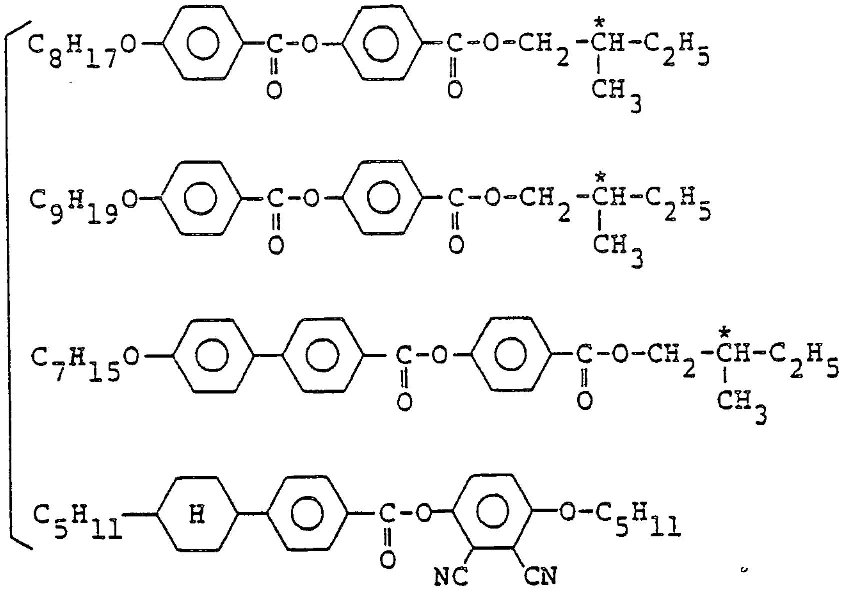

40%

30%

20%

10%

This composition is a material which can be considered to have a chain length difference corresponding to ethylene in the difference of molecular chain length of component compounds.

This composition showed Sc* phase at a temperature of 0 ~ 65°C, turned to $S_A$ phase at 65°C, to cholesteric phase (hereinafter abbreviated as Ch phase) at 69°C and to isotropic liquid at 84°C. Further, a value of spontaneous polarization of this composition was 3.8 nC/cm² at 20°C.

Example 3

A composition consisting of the following 4 kinds of compounds represented by the general formula (i) was prepared.

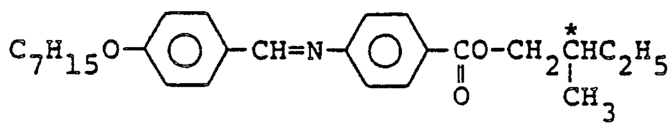

15%

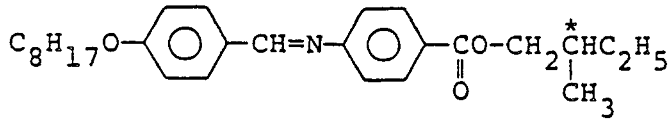

45%

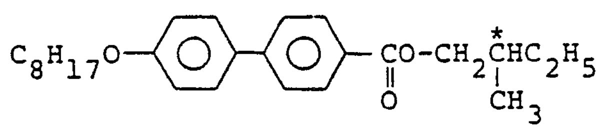

20%

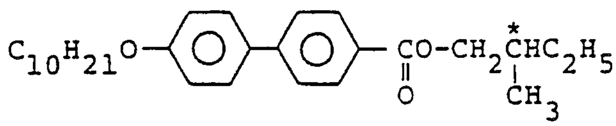

20%

This liquid crystal composition is a material which can be considered to have a chain length difference corresponding to ethylene in the maximum difference of molecular chain length of component chiral smectic liquid crystal compounds. This composition showed Sc* phase from 10°C, turned to $S_A$ phase at 40°C and to isotropic liquid at 63°C. Further, the value of spontaneous polarization of this composition was 6 nC/cm² at 20°C.

Example 4

A liquid crystal composition consisting of, as the compounds represented by the general formula (i), the following 3 kinds of compounds was prepared.

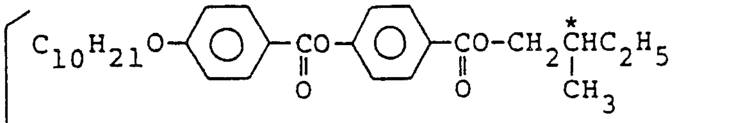

30%

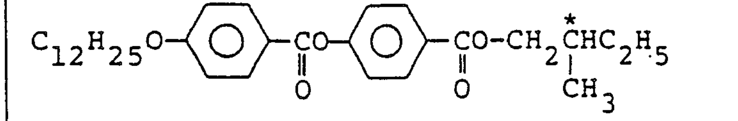

25%

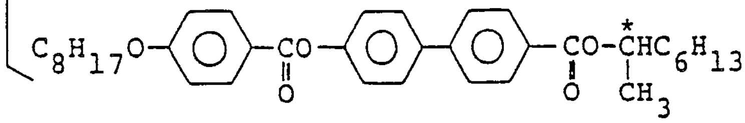

45%

This is a chiral smectic liquid crystal composition in which the maximum difference of length of molecular chains of component compounds can be considered to correspond to tetramethylene group. This composition showed Sc* phase from 13°C, turned to $S_A$ phase at 46°C and to isotropic liquid at 89°C. The value of spontaneous polarization was 30 nC/cm² at 25°C.

Example 5

A liquid crystal composition consisting of the following 4 kinds of compounds represented by the general formula (i) was prepared.

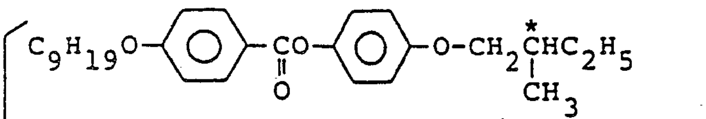

22%

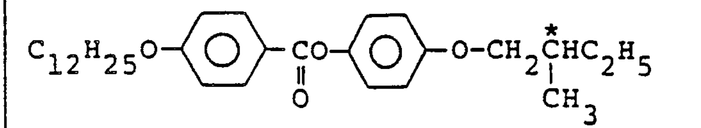

29%

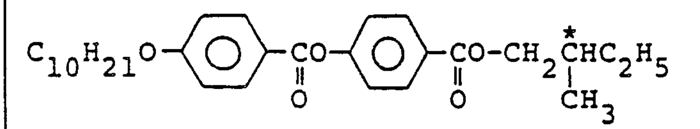

27%

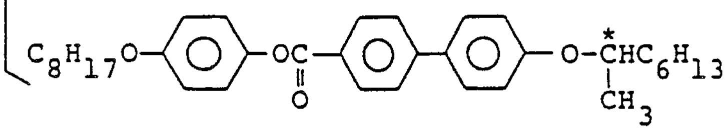

22%

This is a composition in which maximum difference of length of component chains is considered to correspond to the straight chain of alkyl having 5 carbon atoms i.e. the length of pentamethylene group. This composition showed Sc* phase from 16°C, turned to $S_A$ phase at 41°C and to isotropic liquid at 73°C. The value of spontaneous polarization was 18 nC/cm² at 20°C.

Example 6

A composition consisting of the following 3 kinds of compound represented by the general formula (i) was prepared.

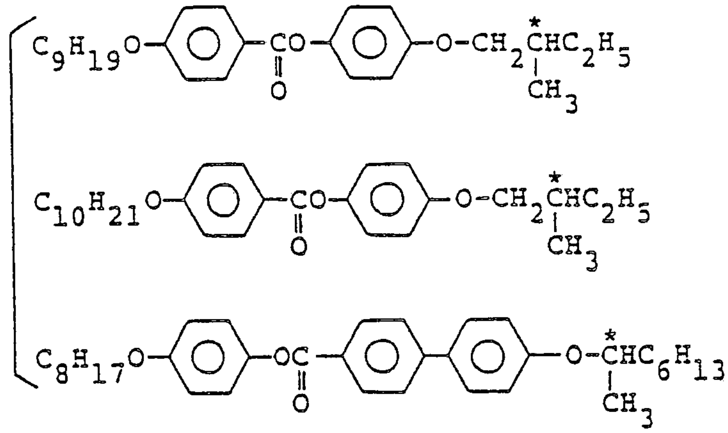

45%

33%

22%

This is a material in which maximum difference of molecular chains of components is considered to correspond to the straight chain alkyl having carbon number of 5. This composition showed Sc* phase from 16°C, turned to $S_A$ phase at 49°C and to Ch phase at 64°C and further to isotropic liquid at 69°C. Further a value of spontaneous polarization was 20 nC/cm$^2$ at 20°C.

Example 7

A ferroelectric chiral smectic liquid crystal composition prepared according to the process of Example 1 was filled into a cell having been coated with an aligning agent of polyvinyl alcohol, and subjected to parallel aligning treatment by rubbing of its surface, and having a cell gap of 3 µm and provided with transparent electrodes. When this liquid crystal cell is inserted between two polarizers arranged in crossed nicols state and a low frequency A.C. of 0.5 Hz, and 15V was applied, clear-cut switching operation was observed and thus a liquid crystal display element which shows very good contrast and a quick response of 2 millisecond (m.sec) was obtained.

Example 8

When a composition prepared according to the process of Example 2, made into a so-called guest-host type by adding 3% by weight of anthraquinone dye, D-16, supplied from BDH Co. was filled into a cell, the same with that of Example 3 and one of the polarizer was arranged so as to make its polarization plane parallel to a molecular axis and a low frequency A.C. of 0.5 Hz and 15V was applied, clear-cut switching operation was observed and a colour liquid crystal display element which shows very good contrast and a quick response of 2 m.sec was obtained.

**Claims**

1. A ferroelectric chiral smectic liquid crystal composition comprising at least three kinds of chiral smectic liquid crystal compounds within which a difference in molecular chain length does not exceed a length corresponding to the straight alkyl chain having 5 carbon atoms.

2. A ferroelectric chiral smectic liquid crystal composition as claimed in claim 1, wherein said chiral smectic liquid crystal compounds are those represented by a general formula:

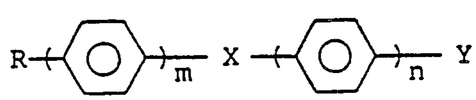

(i)

wherein m and n each independently are an integer of 1 or 2, X is

$$-\underset{\underset{O}{\|}}{C}-O-,$$

$$-CH=N-, -CH_2O-,$$

$$-O-\underset{\underset{O}{\|}}{C}-,$$

$-N=CH-$, $-OCH_2-$, or a single bond, R is an alkyl or alkoxy group having 1 to 18 carbon atoms, Y is an alkyl, alkoxy, alkoxycarbonyl, alkanoyl, or alkanoyloxy group having an asymmetric carbon atom.

3. A light switching element using a ferroelectric chiral smectic liquid crystal composition comprising at least three kinds of chiral smectic liquid crystal compounds within which a difference in molecular chain length does not exceed a length corresponding to the straight alkyl chain having 5 carbon atoms.

**Patentansprüche**

1. Ferroelektrische, chirale, smektische Flüssigkristall-Zusammensetzung, die mindestens drei Arten von chiralen, smektischen Flüssigkristall-Verbindungen, bei denen ein Unterschied in der molekularen Kettenlänge nicht die Länge überschreitet, die einer geradkettigen Alkylkette mit 5 Kohlenstoffatomen entspricht, umfasst.

2. Ferroelektrische, chirale, smektische Flüssigkristall-Zusammensetzung nach Anspruch 1, wobei die chiralen, smektischen Flüssigkristall-Verbindungen durch eine allgemeine Formel

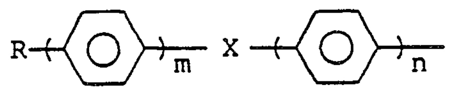 (i)

dargestellt sind, wobei m und n jeweils unabhängig voneinander eine Zahl von 1 oder 2 bedeuten, X

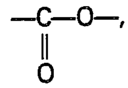

—CH=N—, $—CH_2O—$,

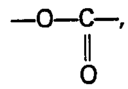

—N=CH—, $—OCH_2—$, oder eine Einfachbindung ist, R eine Alkyl- oder Alkoxygruppe mit 1 bis 18 Kohlenstoffatomen ist, Y eine Alkyl-, Alkoxy-, Alkoxycarbonyl-, Alkanoyl- oder Alkanoyloxygruppe mit einem asymmetrischen Kohlenstoffatom ist.

3. Lichtschaltelement, das eine ferroelektrische, chirale, smektische Flüssigkristall-Zusammensetzung verwendet, die mindestens drei Arten von chiralen, smektischen Flüssigkristall-Verbindungen umfasst, bei denen ein Unterschied in der molekularen Kettenlänge nicht eine Länge überschreitet, die der geradkettigen Alkylkette mit 5 Kohlenstoffatomen entspricht.

**Revendications**

1. Composition de cristal liquide smectique chiral ferroélectrique comprenant au moins trois types de composés cristaux liquides smectiques chiraux entre lesquels la différence de longueur de chaîne moléculaire ne dépasse pas une longueur correspondant à la chaîne alkyle droite ayant 5 atomes de carbone.

2. Composition de cristal liquide smectique chiral ferroélectrique selon la revendication 1, dans laquelle lesdits composés cristaux liquides smectiques chiraux sont représentés par la formule générale:

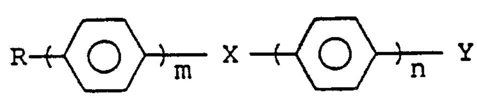 (i)

dans laquelle m et n représentent, indépendamment l'une de l'autre, un nombre entier égal à 1 ou 2, X est

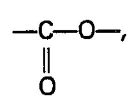

—CH=N—, $—CH_2O—$,

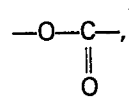

—N=CH—, $—OCH_2—$, ou une liaison simple, R est un groupe alkyle ou alcoxy ayant 1 à 18 atomes de carbone, Y est un groupe alkyle, alcoxy, alcoxycarbonyle, alcanoyle ou alcanoyloxy ayant 1 atome de carbone asymétrique.

3. Elément interrupteur de lumière utilisant une composition de cristal liquide smectique chiral ferroélectrique comprenant au moins trois types de composés cristaux liquides smectiques chiraux entre lesquels la différence de longueur de chaîne moléculaire ne dépasse pas une longueur correspondant à la chaîne alkyle droite ayant 5 atomes de carbone.

FIG. 1

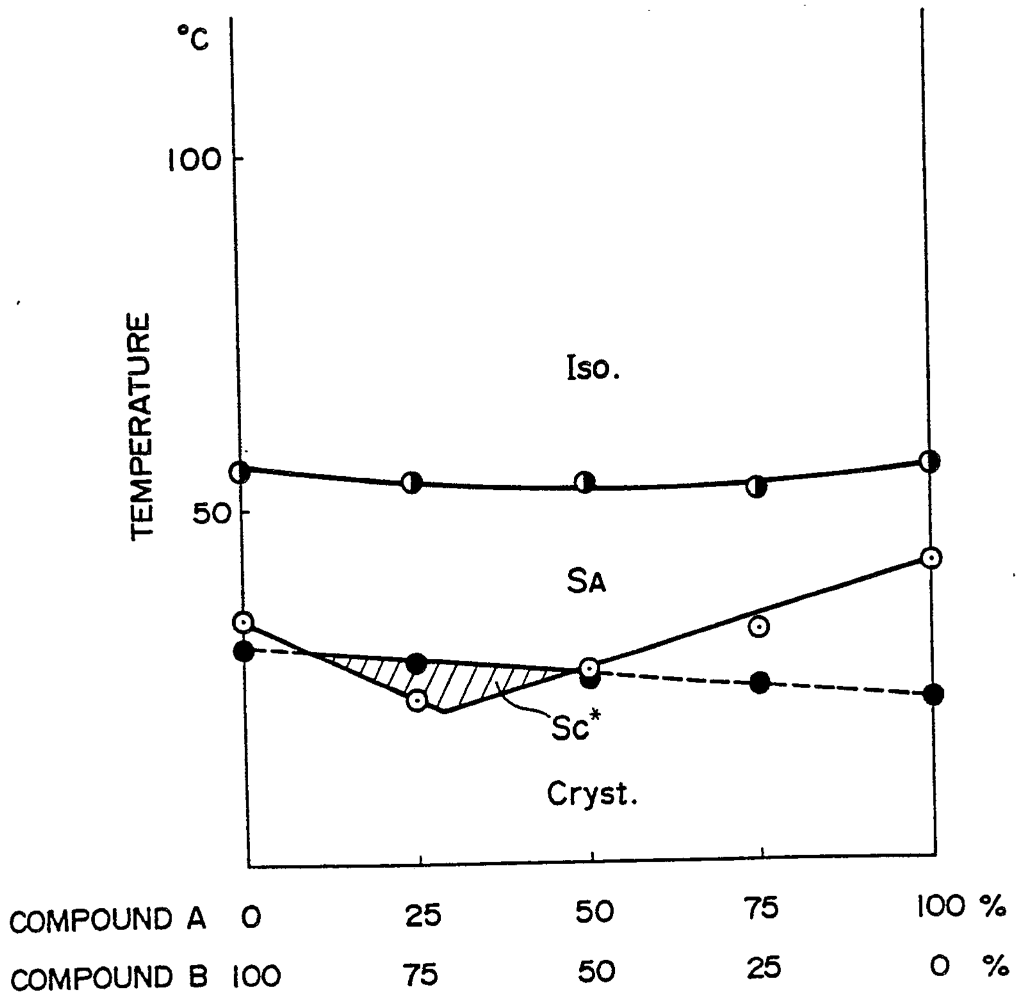
°C
100
50
TEMPERATURE
Iso.
SA
Sc*
Cryst.
COMPOUND A 0 25 50 75 100 %
COMPOUND B 100 75 50 25 0 %

FIG. 2

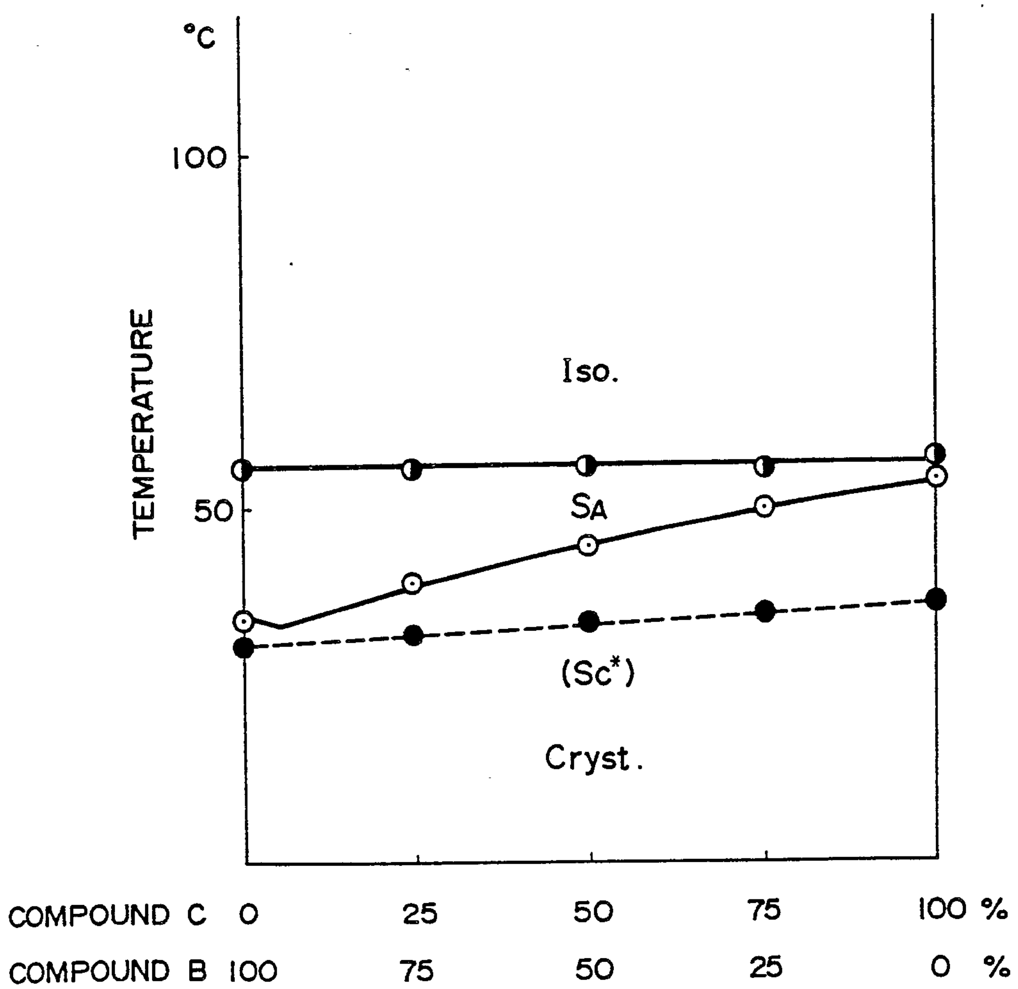
°C
100
50
TEMPERATURE
Iso.
SA
(Sc*)
Cryst.
COMPOUND C 0 25 50 75 100 %
COMPOUND B 100 75 50 25 0 %

FIG. 3

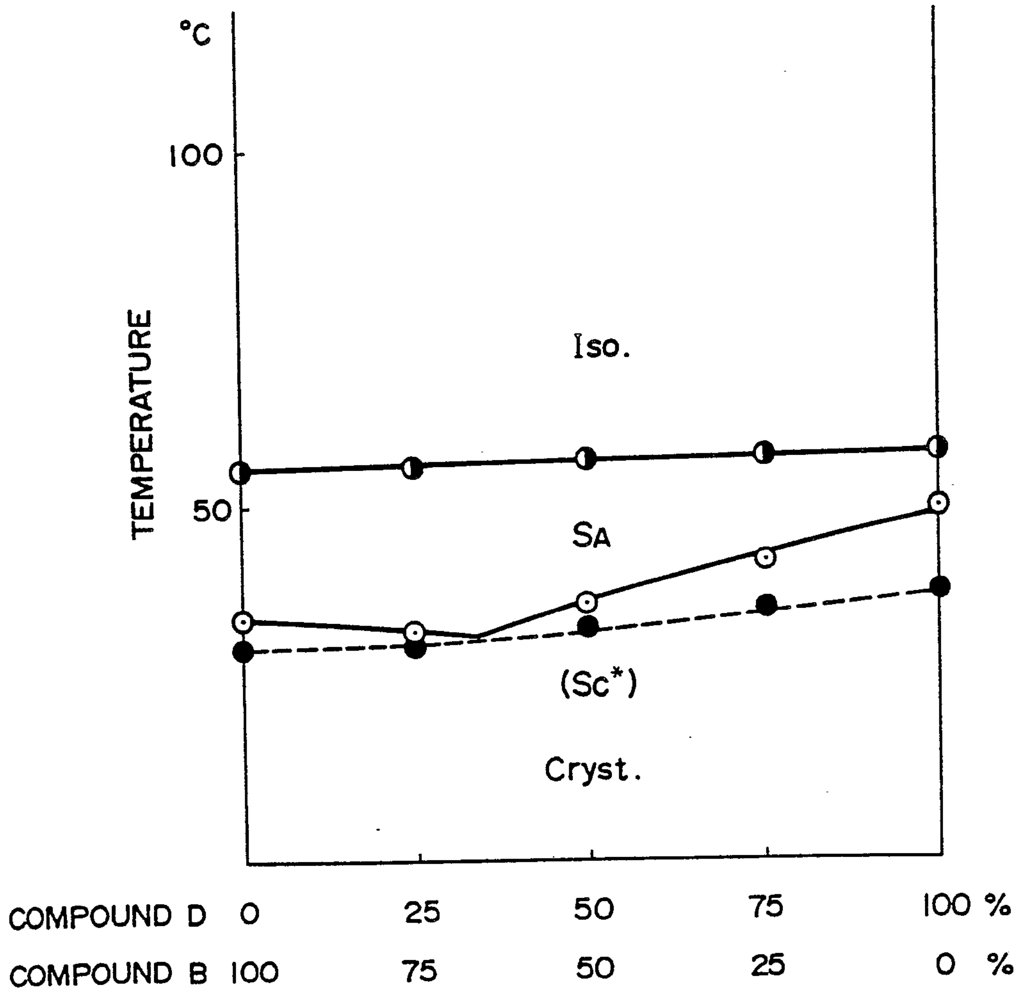
°C
100
50
TEMPERATURE
Iso.
SA
(Sc*)
Cryst.
COMPOUND D 0 25 50 75 100 %
COMPOUND B 100 75 50 25 0 %

FIG. 4

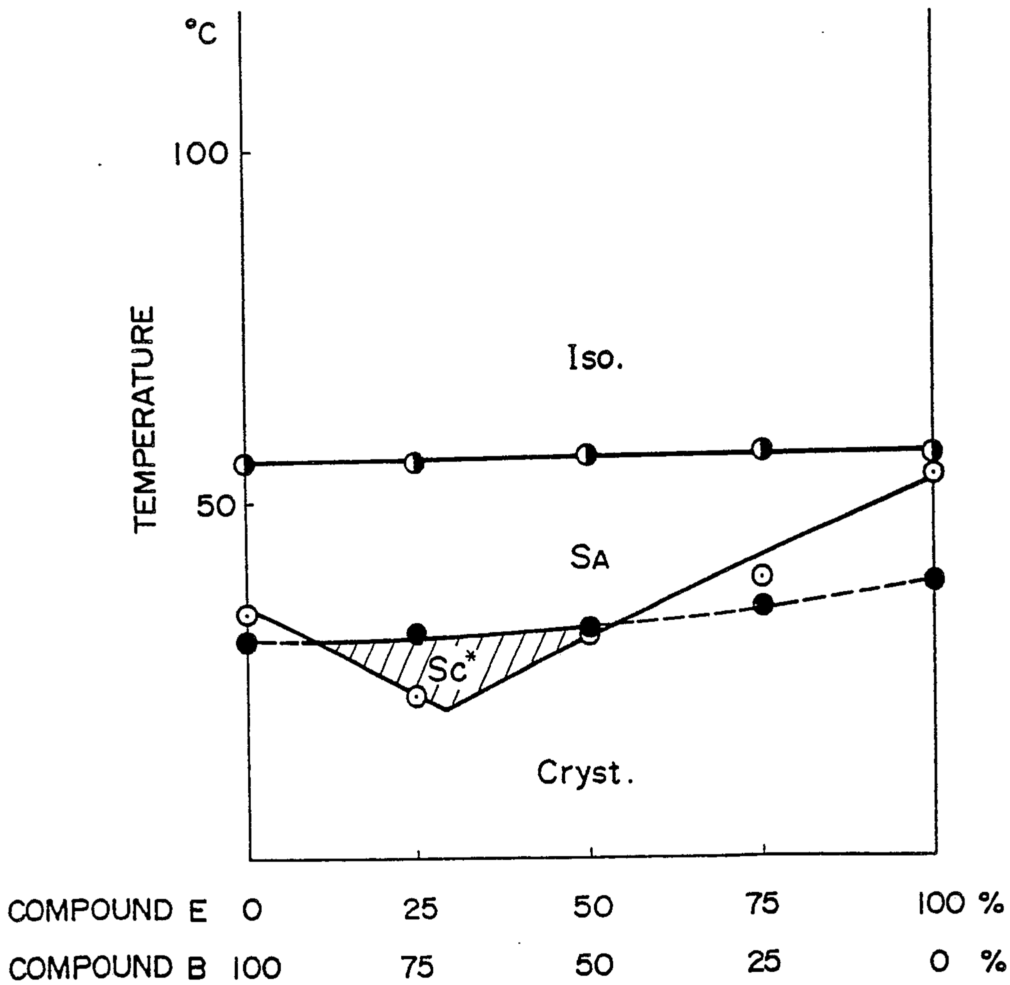
°C
100
50
TEMPERATURE
Iso.
SA
Sc*
Cryst.
COMPOUND E 0 25 50 75 100 %
COMPOUND B 100 75 50 25 0 %

FIG. 5

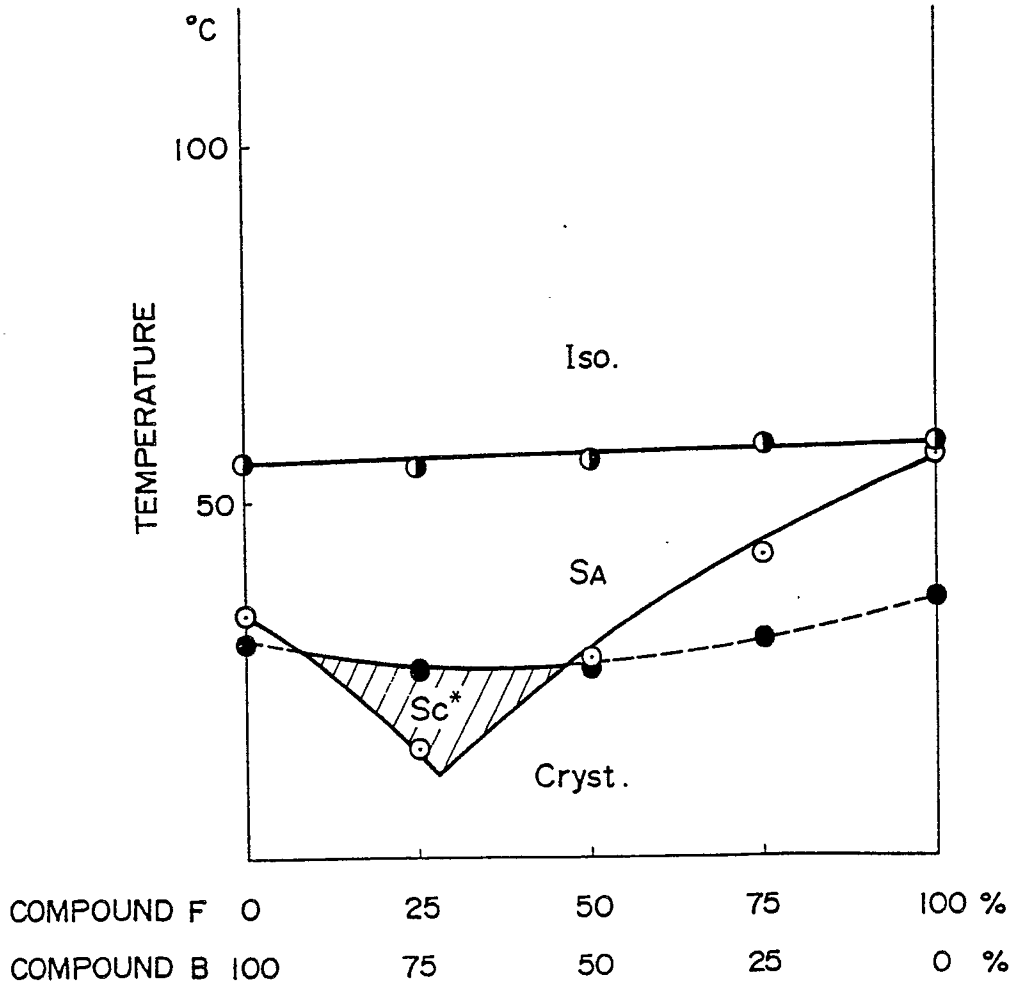
°C
100
50
TEMPERATURE
Iso.
SA
Sc*
Cryst.
COMPOUND F 0 25 50 75 100 %
COMPOUND B 100 75 50 25 0 %

FIG. 6

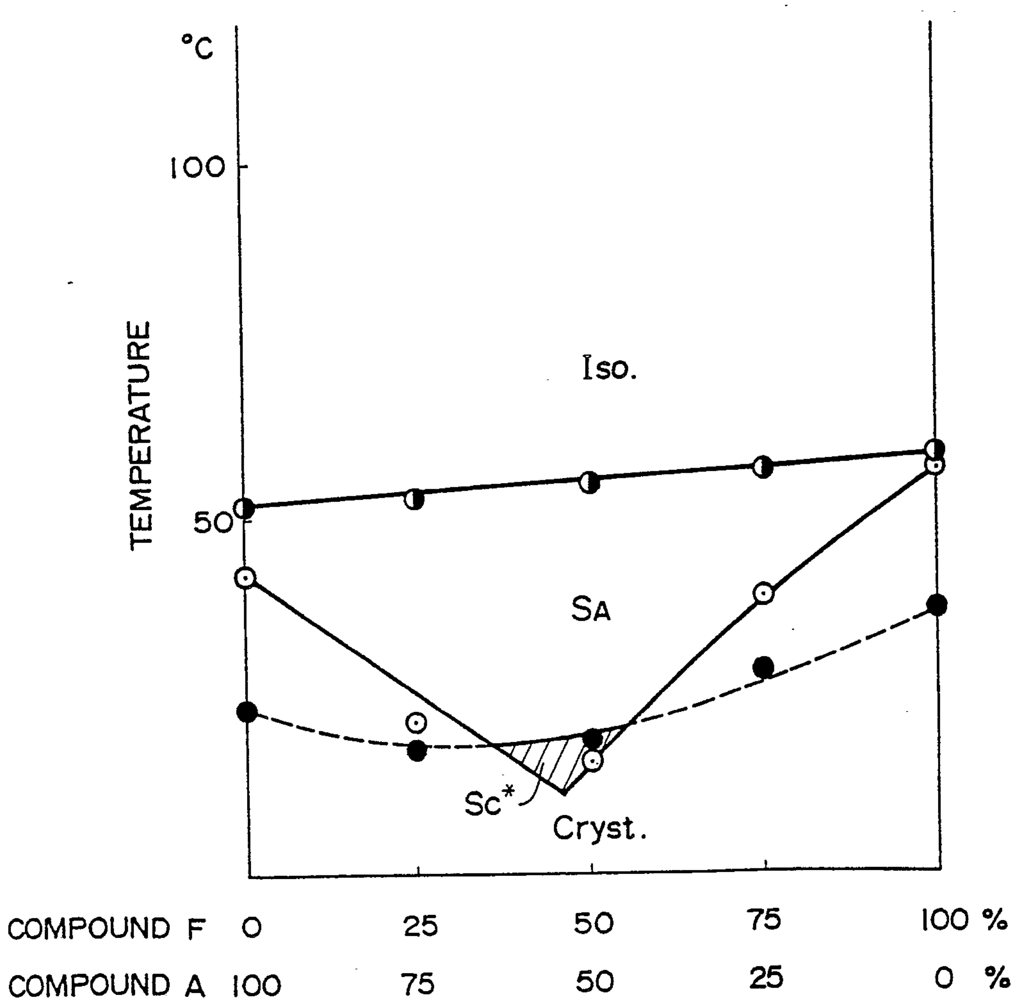
°C
100
50
TEMPERATURE
Iso.
SA
Sc*
Cryst.
COMPOUND F 0 25 50 75 100 %
COMPOUND A 100 75 50 25 0 %

FIG. 7

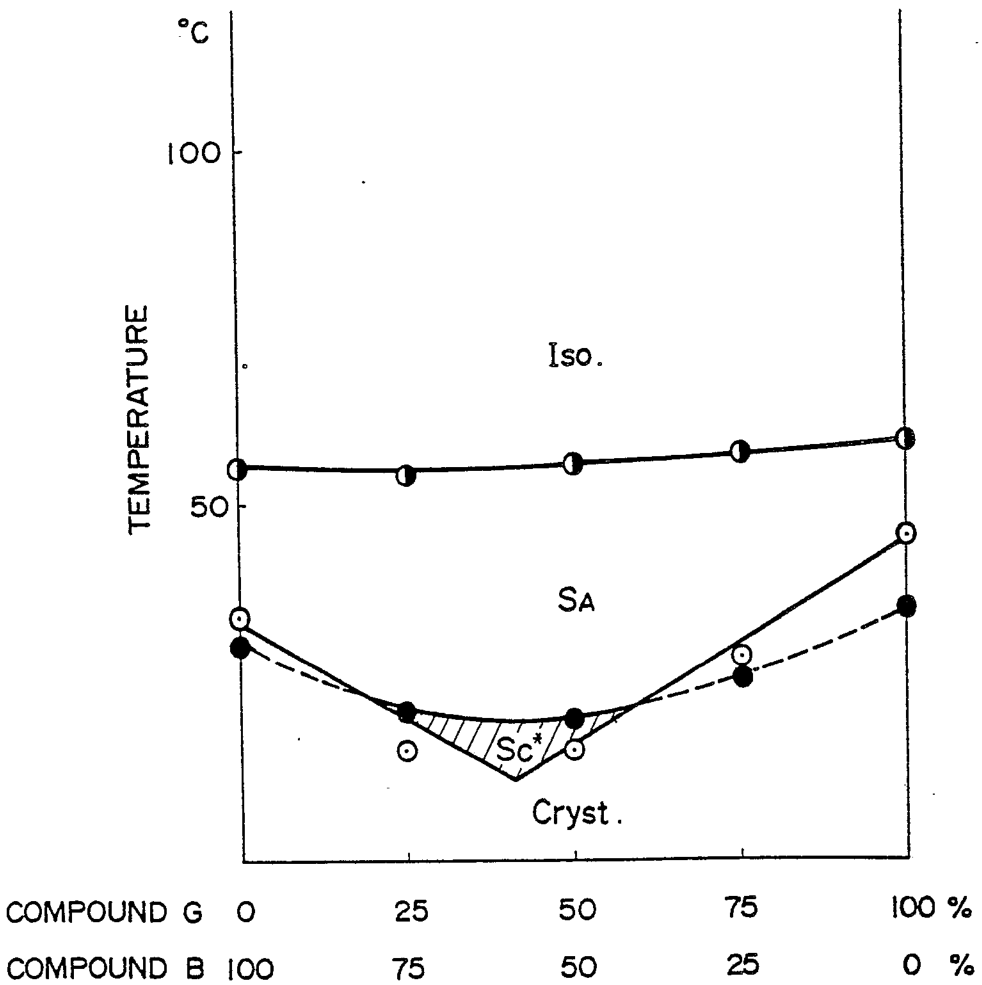
°C
100
50
TEMPERATURE
Iso.
SA
Sc*
Cryst.
COMPOUND G 0 25 50 75 100 %
COMPOUND B 100 75 50 25 0 %

FIG. 8

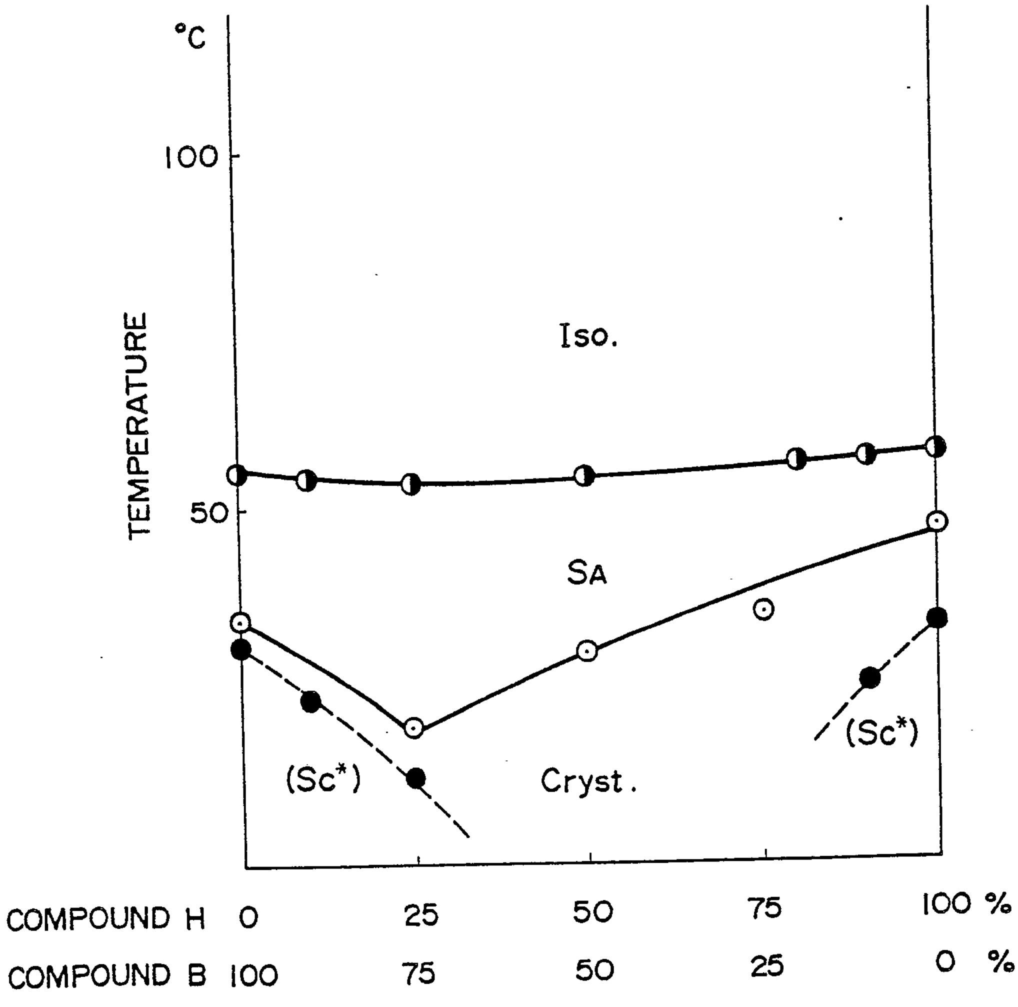
°C
100
50
TEMPERATURE
Iso.
SA
(Sc*)
Cryst.
(Sc*)
COMPOUND H 0 25 50 75 100 %
COMPOUND B 100 75 50 25 0 %

FIG. 9

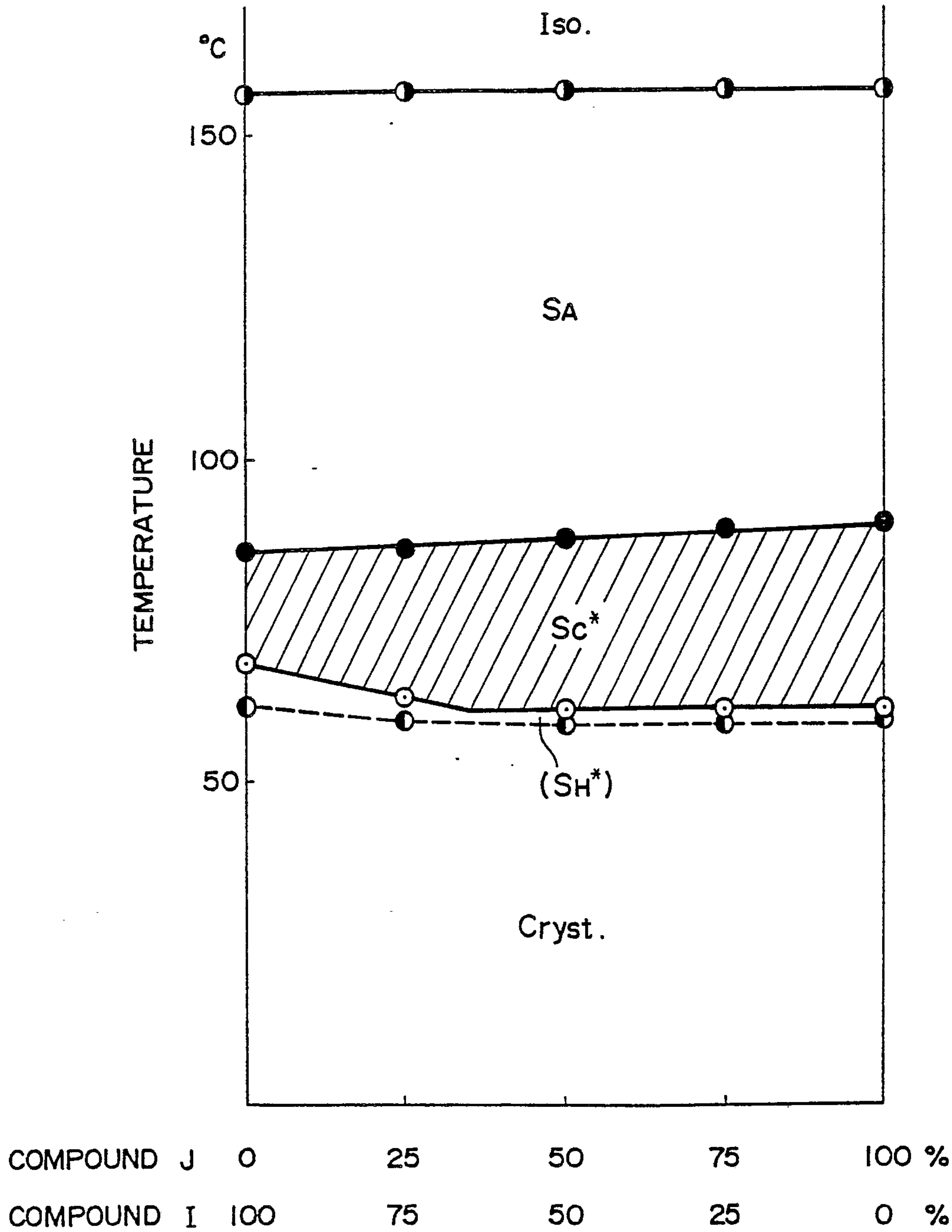
°C
150
100
50
TEMPERATURE
Iso.
SA
Sc*
(SH*)
Cryst.
COMPOUND J 0 25 50 75 100 %
COMPOUND I 100 75 50 25 0 %

FIG. 10

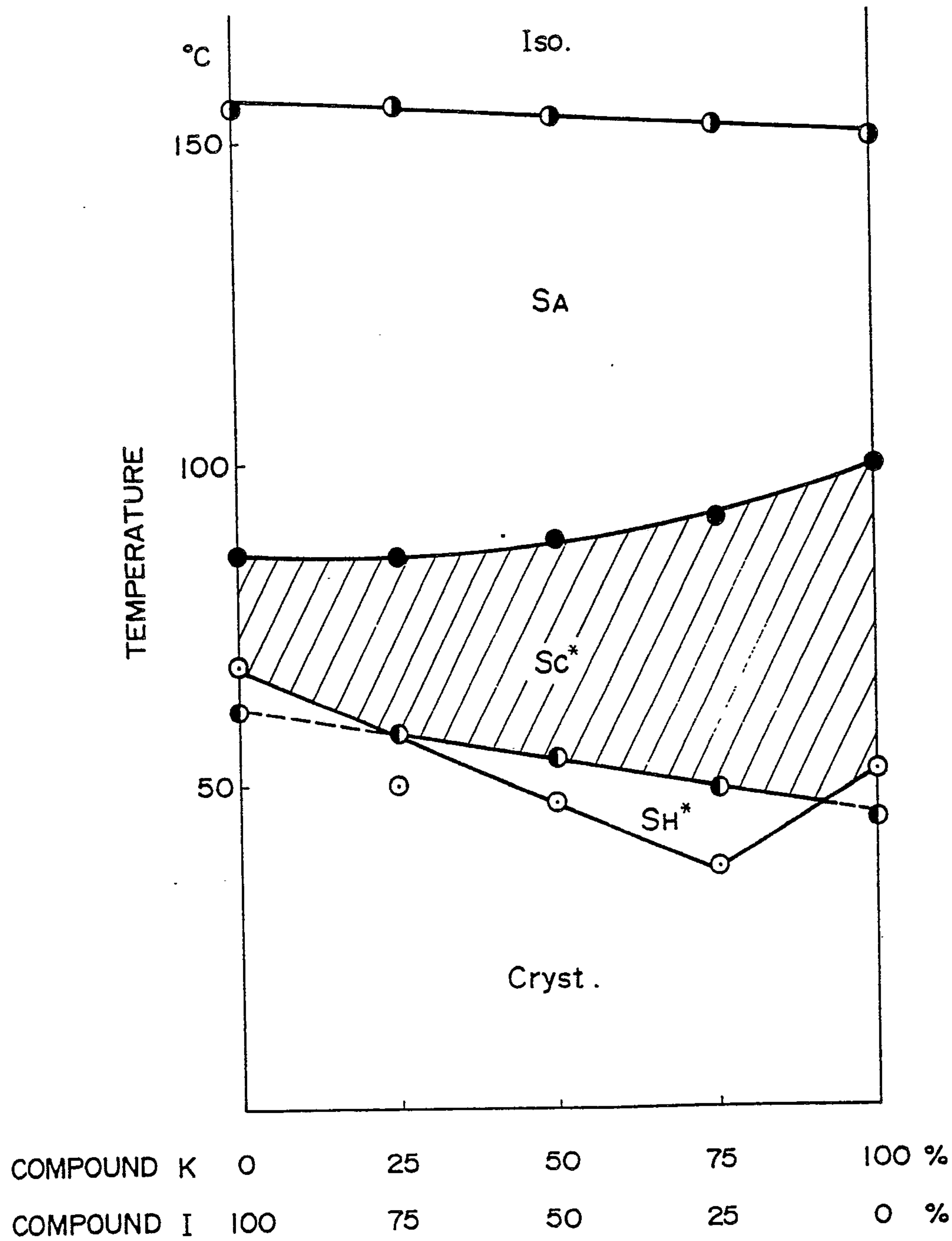
°C
150
100
50
TEMPERATURE
Iso.
SA
Sc*
SH*
Cryst.
COMPOUND K 0 25 50 75 100 %
COMPOUND I 100 75 50 25 0 %

FIG. 11

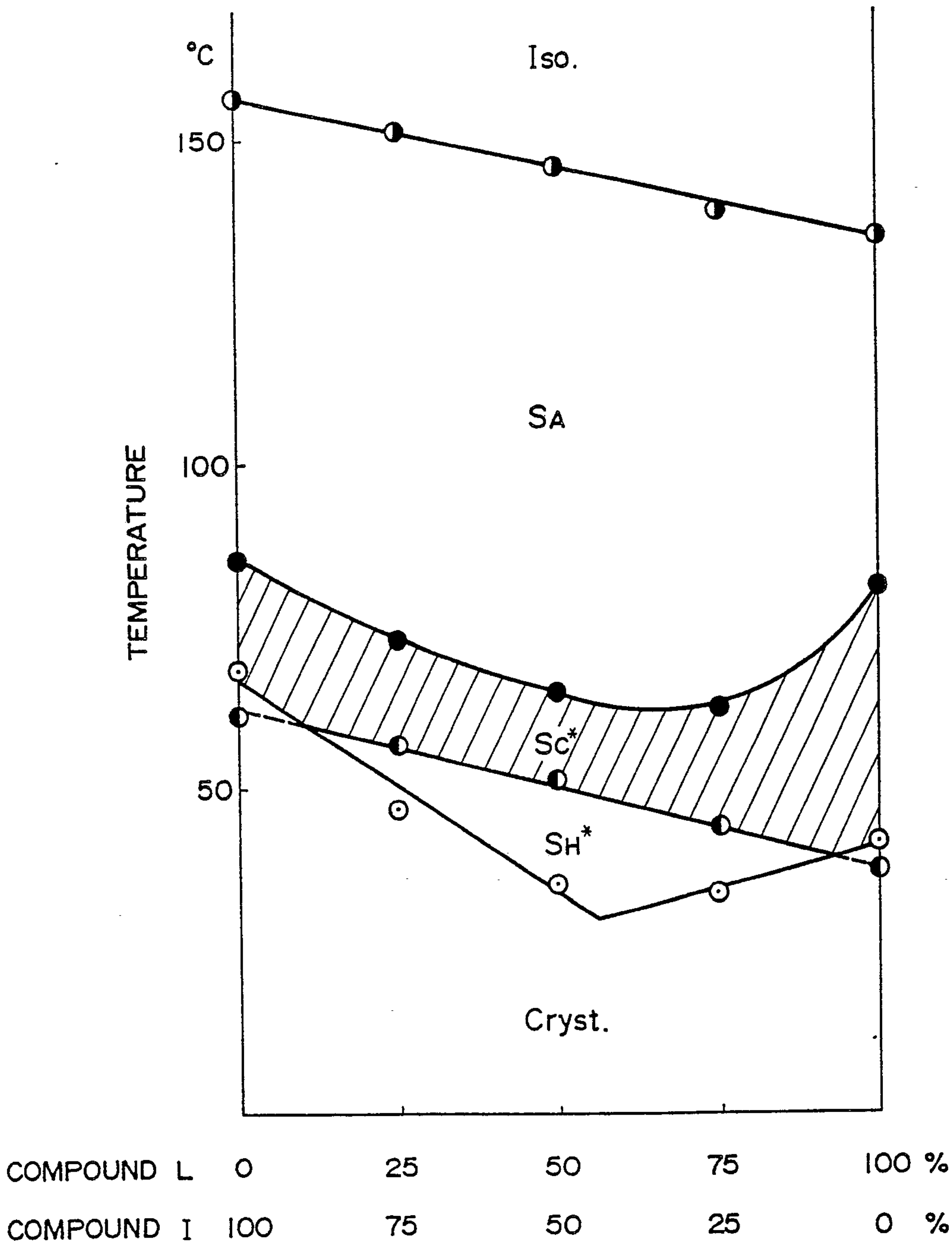
°C
Iso.
150
SA
100
TEMPERATURE
Sc*
50
SH*
Cryst.
COMPOUND L 0 25 50 75 100 %
COMPOUND I 100 75 50 25 0 %

FIG. 12

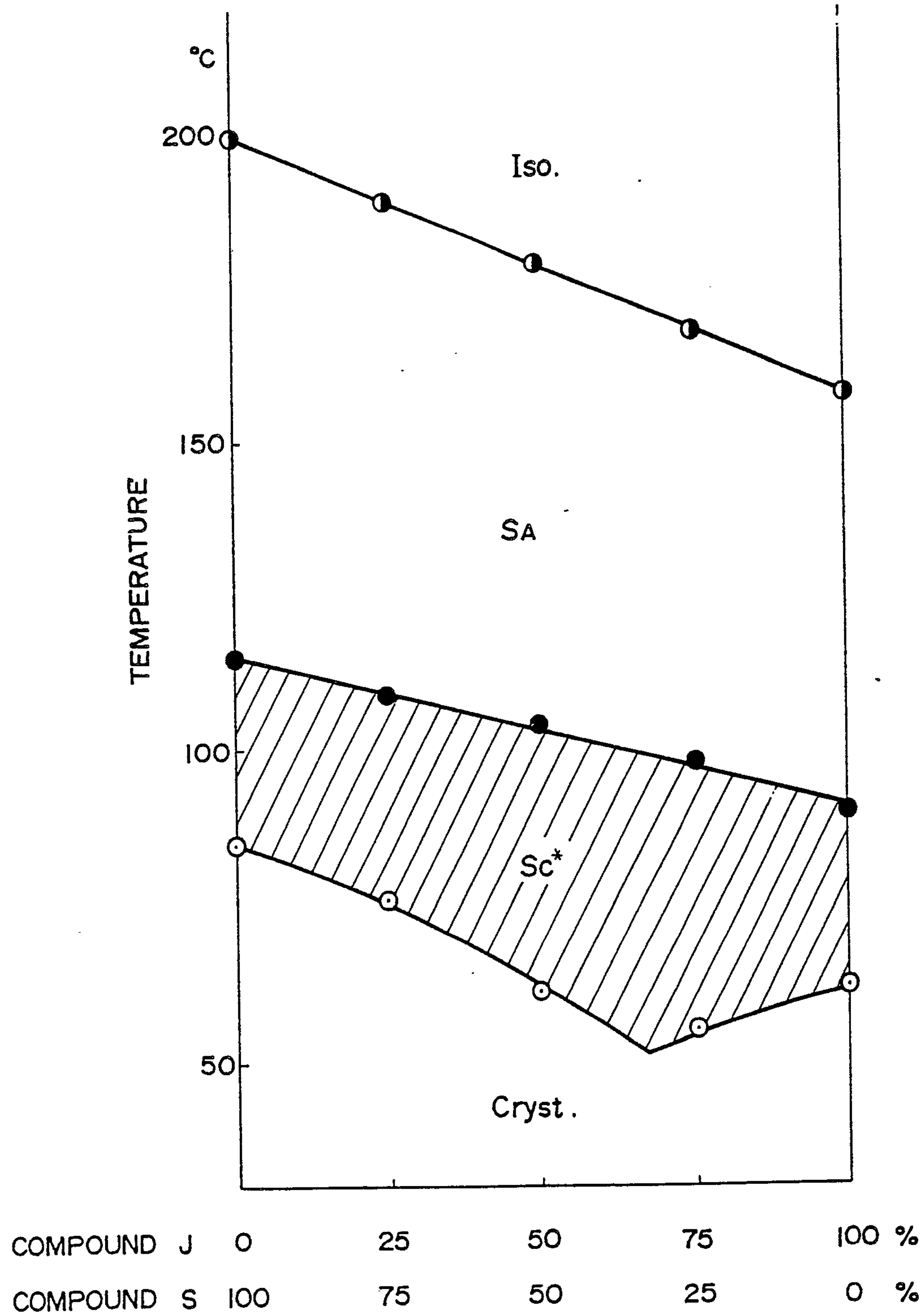
°C
200
150
100
50
TEMPERATURE
Iso.
SA
Sc*
Cryst.
COMPOUND J 0 25 50 75 100 %
COMPOUND S 100 75 50 25 0 %

FIG. 13

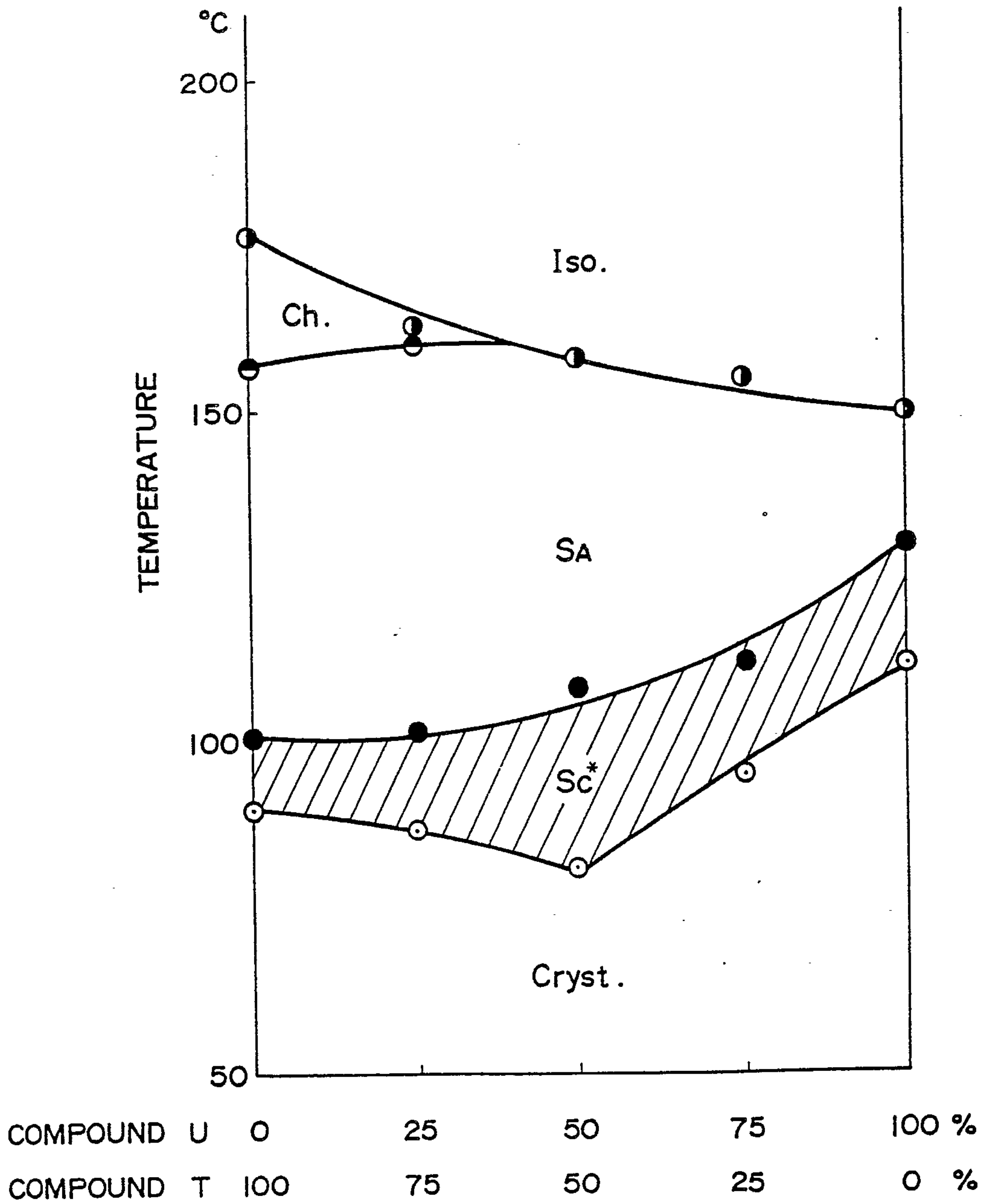
°C
200
150
100
50
TEMPERATURE
Iso.
Ch.
SA
Sc*
Cryst.
COMPOUND U 0 25 50 75 100 %
COMPOUND T 100 75 50 25 0 %

FIG. 14

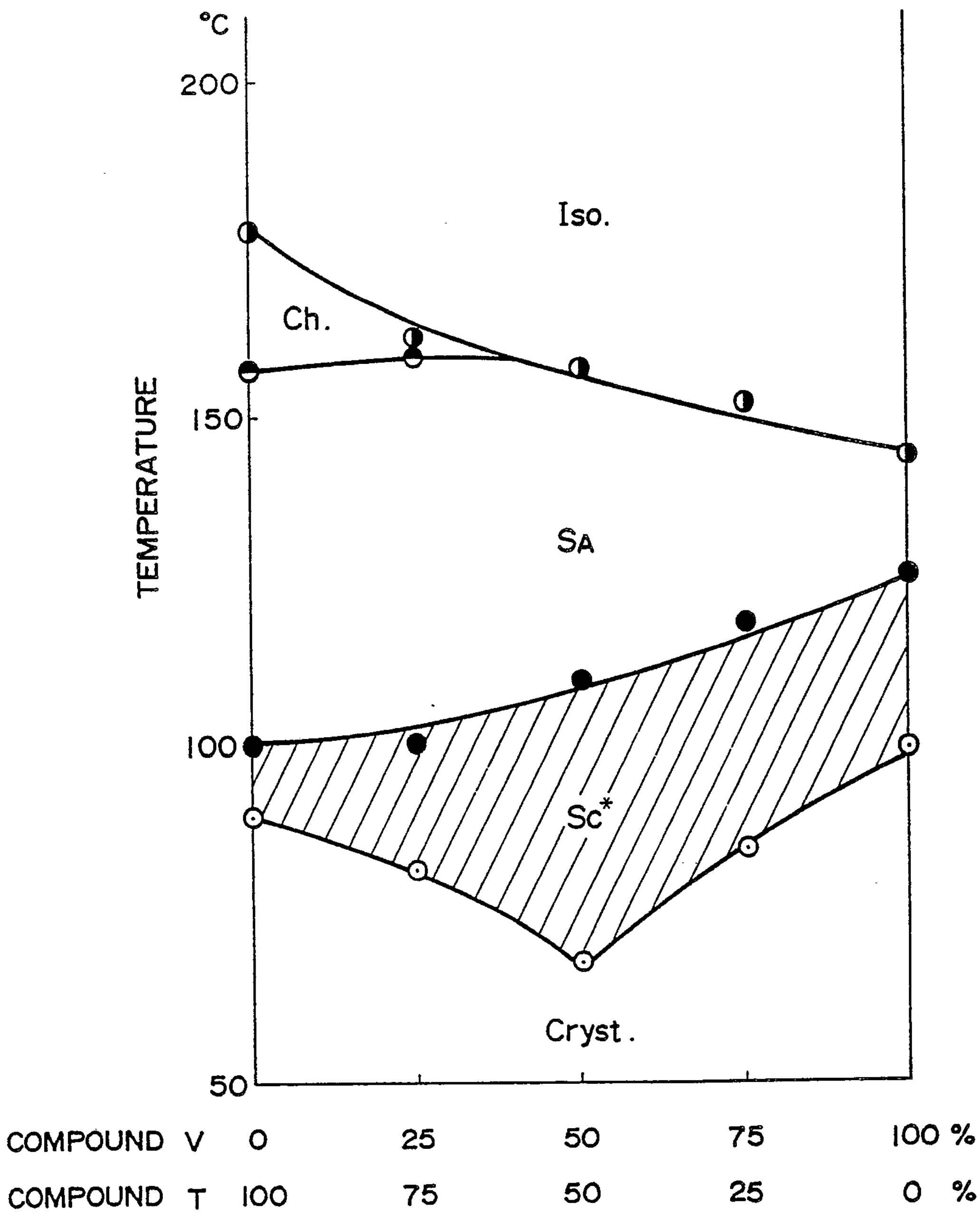
°C
200
150
100
50
TEMPERATURE
Iso.
Ch.
SA
Sc*
Cryst.
COMPOUND V 0 25 50 75 100 %
COMPOUND T 100 75 50 25 0 %

FIG. 15

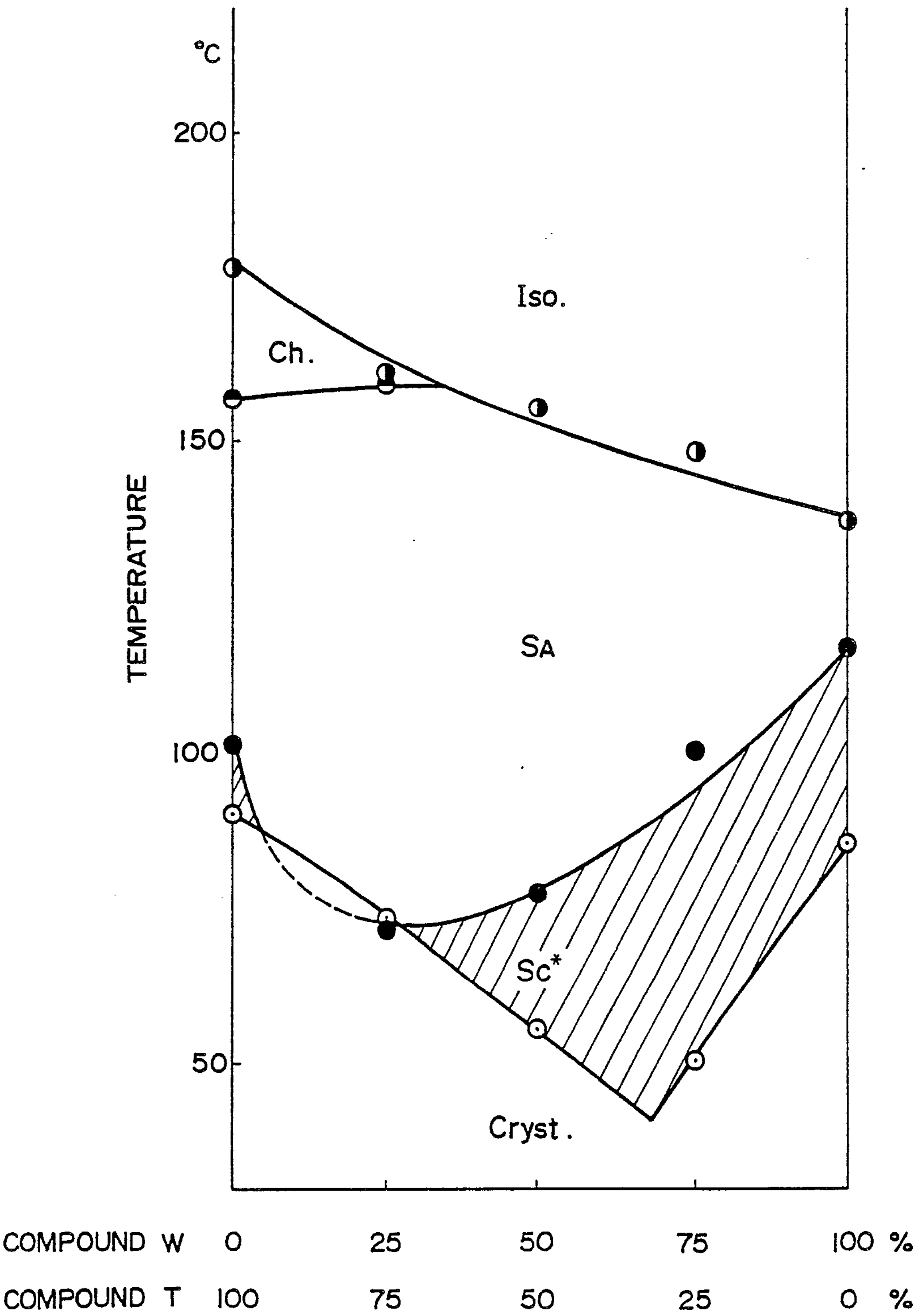
°C
200
150
100
50
TEMPERATURE
Iso.
Ch.
SA
Sc*
Cryst.
COMPOUND W 0 25 50 75 100 %
COMPOUND T 100 75 50 25 0 %

FIG. 16

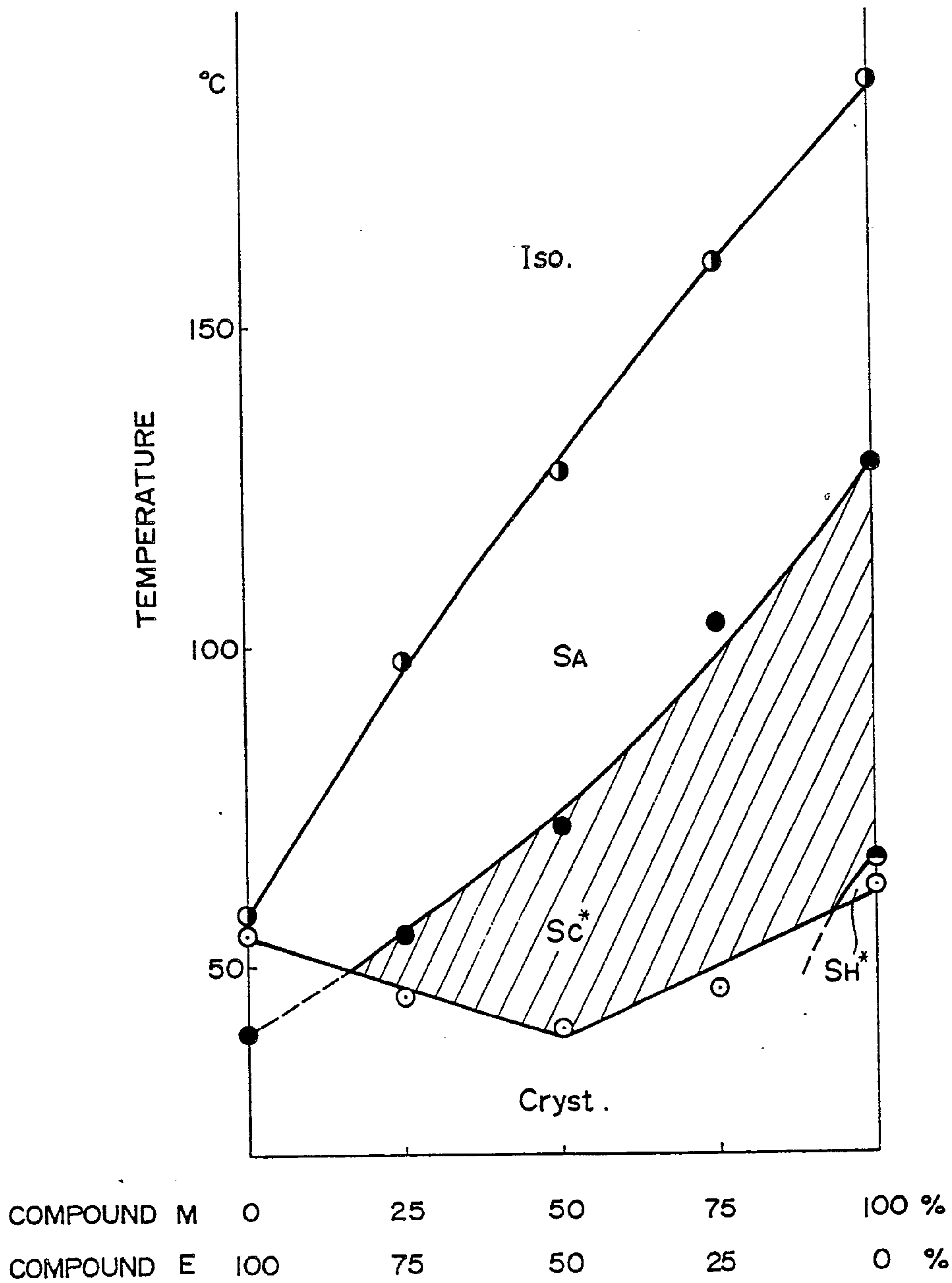
°C
TEMPERATURE
150
100
50
Iso.
SA
Sc*
SH*
Cryst.
COMPOUND M 0 25 50 75 100 %
COMPOUND E 100 75 50 25 0 %

FIG. 17

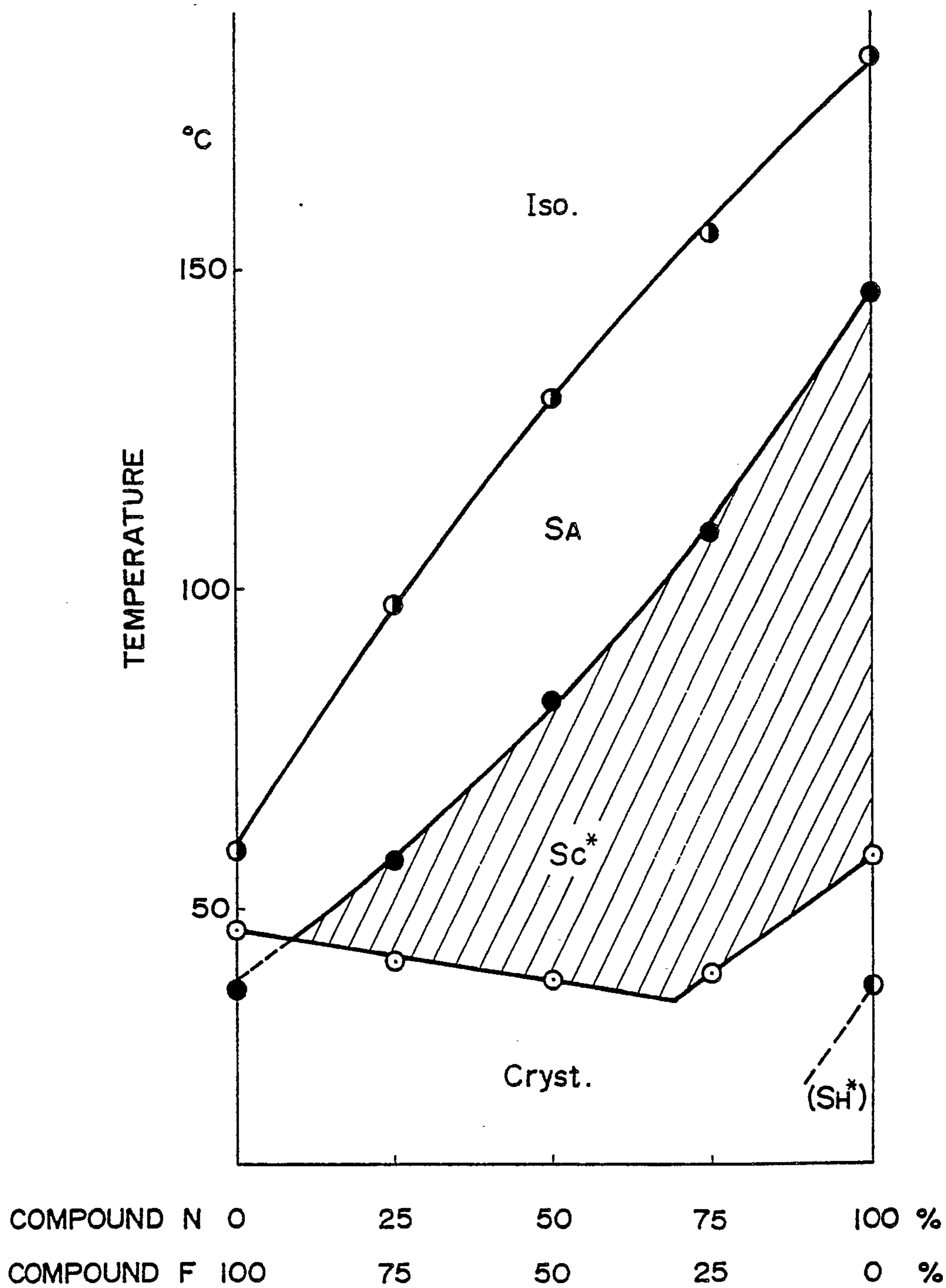
°C
150
100
50
TEMPERATURE
Iso.
SA
Sc*
Cryst.
(SH*)
COMPOUND N 0 25 50 75 100 %
COMPOUND F 100 75 50 25 0 %

FIG. 18

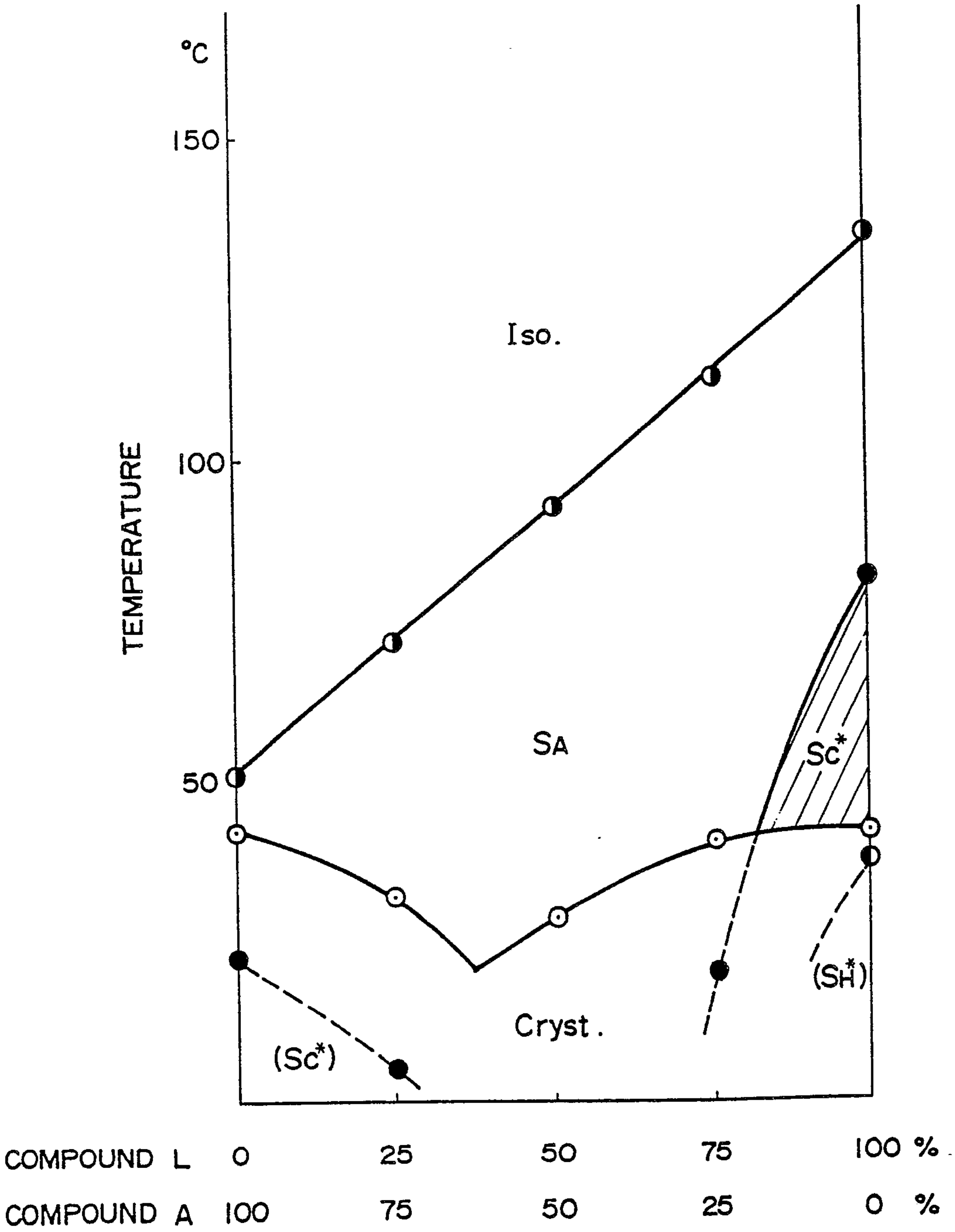
°C
150
100
50
TEMPERATURE
Iso.
SA
Sc*
(SH*)
Cryst.
(Sc*)
COMPOUND L 0 25 50 75 100 %
COMPOUND A 100 75 50 25 0 %

FIG. 19

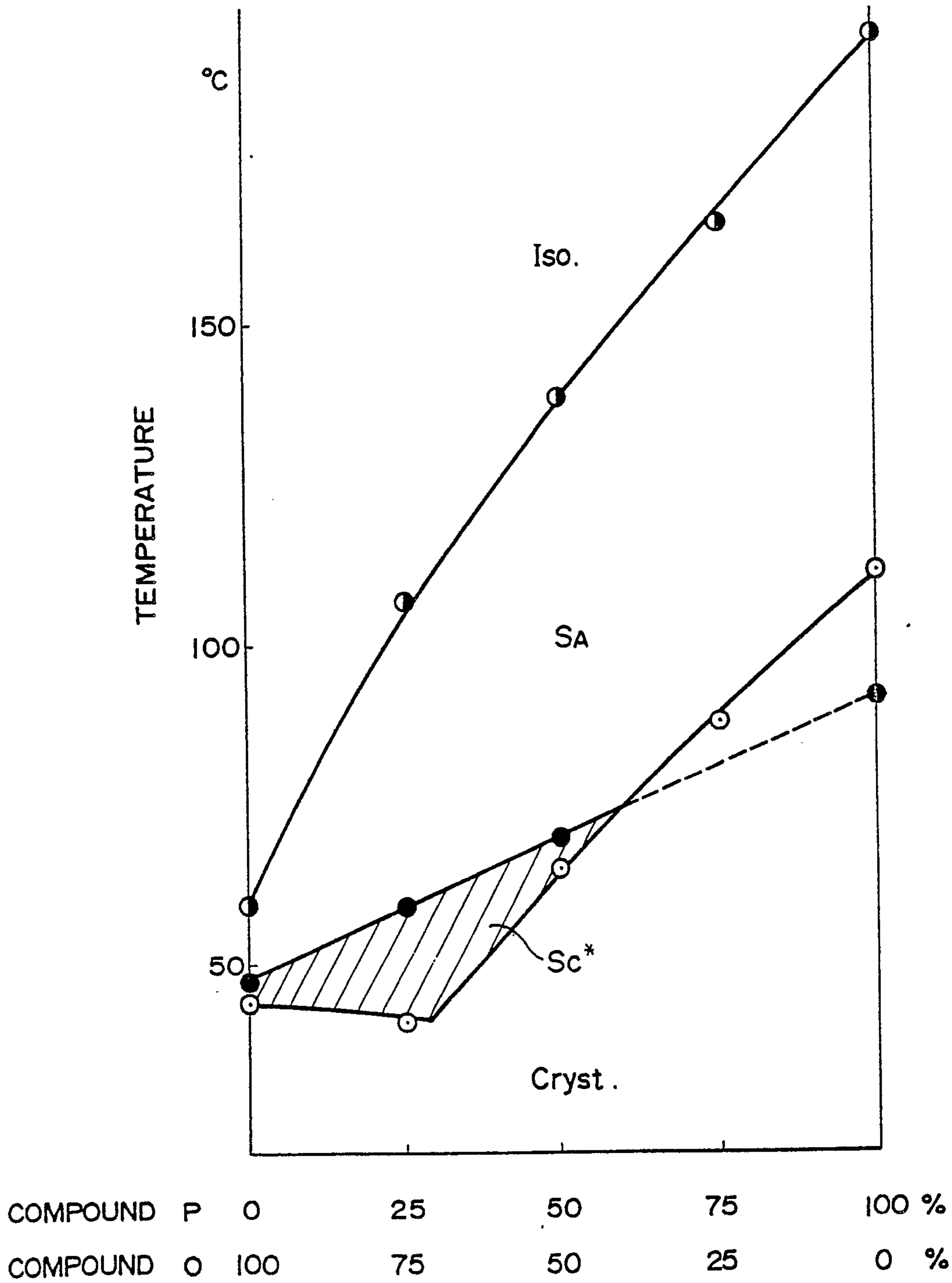
°C
150
100
50
TEMPERATURE
Iso.
SA
Sc*
Cryst.
COMPOUND P 0 25 50 75 100 %
COMPOUND O 100 75 50 25 0 %

FIG. 20

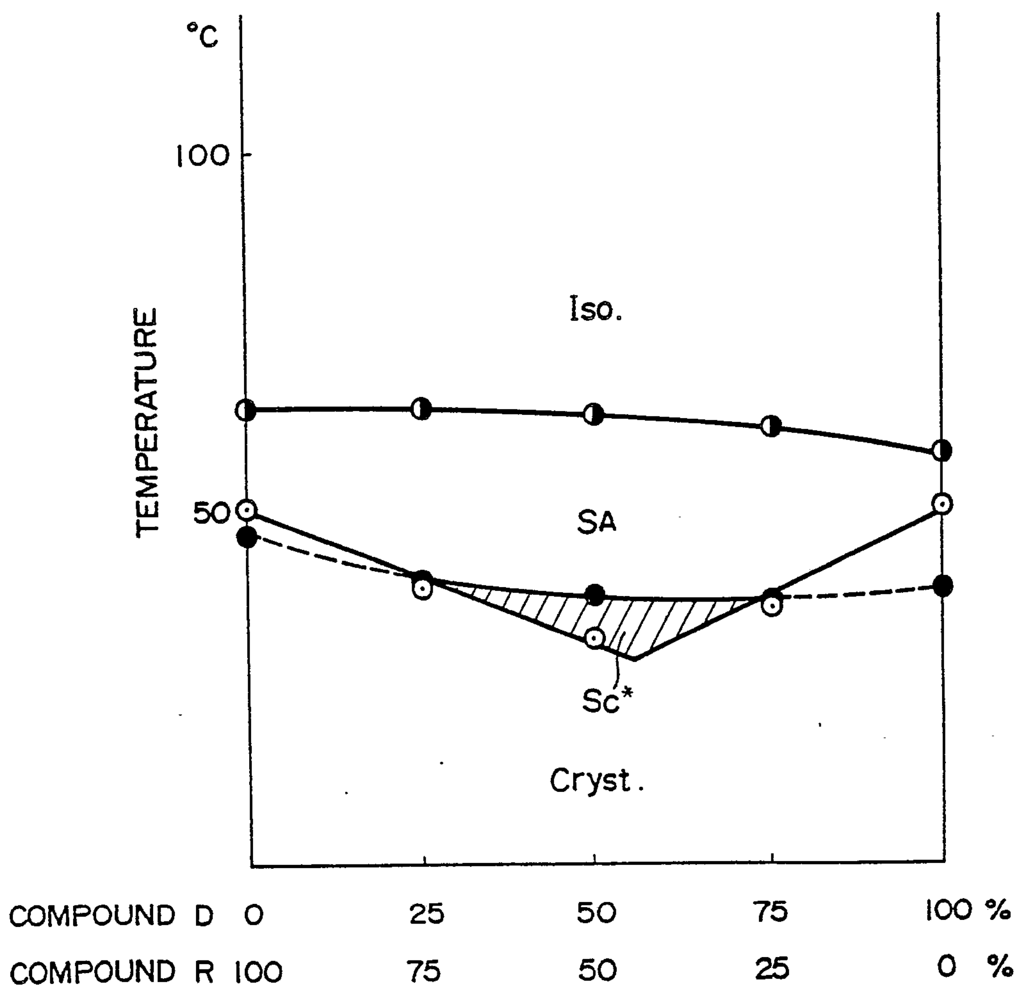
°C
100
50
TEMPERATURE
Iso.
SA
Sc*
Cryst.
COMPOUND D 0 25 50 75 100 %
COMPOUND R 100 75 50 25 0 %

FIG. 21

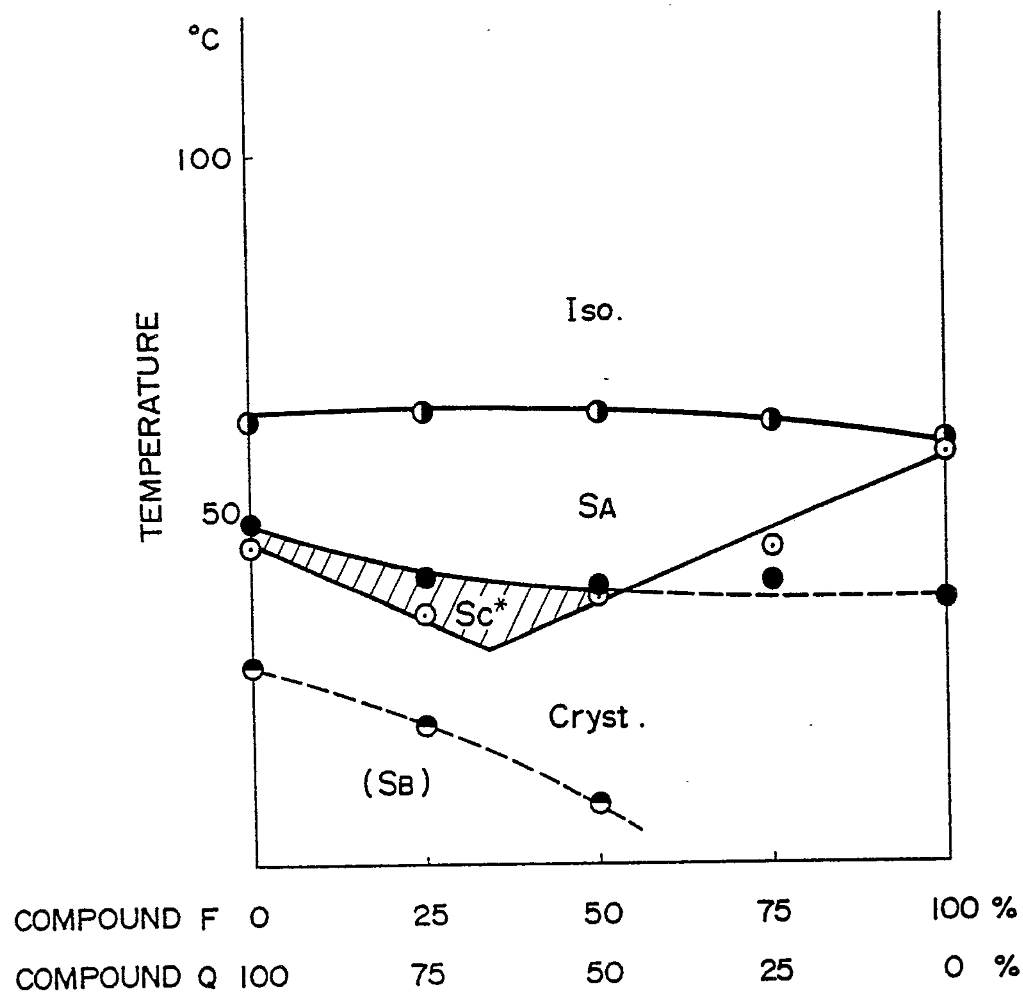
°C
100
50
TEMPERATURE
Iso.
SA
Sc*
Cryst.
(SB)
COMPOUND F 0 25 50 75 100 %
COMPOUND Q 100 75 50 25 0 %